(19)

Europäisches
Patentamt
European
Patent Office
Office européen
des brevets

(11) **EP 4 177 350 A1**

(12) **EUROPEAN PATENT APPLICATION**
published in accordance with Art. 153(4) EPC

(43) Date of publication:
**10.05.2023  Bulletin 2023/19**

(21) Application number: **21836772.0**

(22) Date of filing: **22.06.2021**

(51) International Patent Classification (IPC):
**C12Q 1/02** $^{(2006.01)}$     **C12M 1/34** $^{(2006.01)}$
**G06T 7/00** $^{(2017.01)}$     **G06T 7/20** $^{(2017.01)}$

(52) Cooperative Patent Classification (CPC):
**C12M 1/34; C12Q 1/02; G06T 7/00; G06T 7/20**

(86) International application number:
**PCT/JP2021/023586**

(87) International publication number:
**WO 2022/009663 (13.01.2022 Gazette 2022/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.07.2020  JP 2020116664**

(71) Applicant: **NIKON CORPORATION
Minato-ku
Tokyo 108-6290 (JP)**

(72) Inventors:
• **TAKASAKI, Tetsuomi
Tokyo 108-6290 (JP)**
• **ICHIHASHI, Toru
Tokyo 108-6290 (JP)**
• **KII, Hiroaki
Tokyo 108-6290 (JP)**
• **YOSHIOKA, Junya
Tokyo 108-6290 (JP)**

(74) Representative: **Hoffmann Eitle
Patent- und Rechtsanwälte PartmbB
Arabellastraße 30
81925 München (DE)**

(54) **MIGRATION ABILITY CALCULATION DEVICE, MIGRATION ABILITY EVALUATION METHOD, AND COMPUTER PROGRAM FOR CAUSING COMPUTER TO EXECUTE MIGRATION ABILITY EVALUATION METHOD**

(57)     In the first aspect of the present invention, provided is a migration property evaluating method, comprising: generating a moving trajectory of a living body as an observation target based on a plurality of images of the observation target obtained by capturing observation images of the observation target a plurality of times in chronological order; calculating a migration property by calculating a migration property scale representing a degree to which the observation target migrates in a certain direction based on the trajectory on the moving trajectory of the observation target; and evaluating a migration property by evaluating whether the observation target satisfies a pre-defined condition based on the migration property scale of the observation target.

FIG.2

**Description**

BACKGROUND

1. TECHNICAL FIELD

The present invention relates to a migration property calculating apparatus, a migration property evaluating method, and a program that causes a computer to perform the migration property evaluating method.

2. RELATED ART

Cell migration refers to the movement of a cell from a location to another location. Cell migration plays an important role in wound healing, cell differentiation, embryonic development and tumor metastasis.
As a method for observing cell migration, a scratch assay is known. In the scratch assay, a scratched region can be observed over time. In Patent document 1, a cell migration testing apparatus is disclosed. Patent Document 1: Japanese Patent No. 6035844.

GENERAL DISCLOSURE

In the first aspect of the present invention, a migration property evaluating method is provided. The migration property evaluating method may include generating a moving trajectory of a living body as an observation target based on a plurality of images of the observation target obtained by capturing observation images of the observation target a plurality of times in chronological order. The migration property evaluating method may include calculating a migration property by calculating a migration property scale representing a degree to which the observation target migrates in a certain direction based on the moving trajectory of the observation target. The migration property evaluating method may include evaluating a migration property by evaluating whether the observation target satisfies a pre-defined condition based on the migration property scale of the observation target.
In the second aspect of the present invention, the calculating a migration property of the migration property evaluating method may include calculating, based on the moving trajectory of the observation target, a distance between start and end points as at least part of the migration property scale, wherein the distance between start and end points is a straight-line distance from a start point to an end point of the trajectory of the observation target. The evaluating a migration property of the migration property evaluating method may include selecting, among a plurality of observation targets, each of which being the observation target, an observation target having the distance between start and end points being equal to or greater than a threshold as an observation target having a high migration property.
In the third aspect of the present invention, the calculating a migration property of the migration property evaluating method may include calculating a total moving distance of the observation target, based on the moving trajectory of the observation target, and/or a linearity of the moving trajectory, as at least part of the migration property scale. The evaluating a migration property of the migration property evaluating method may include selecting, among a plurality of observation targets, each of which being the observation target, an observation target having the total moving distance being equal to or greater than a threshold and the linearity being equal to or greater than a threshold as an observation target having a high migration property.
In the fourth aspect of the present invention, the calculating a migration property of the migration property evaluating method may include calculating a reaching distance from the start point to a farthest point farthest from the start point on the moving trajectory of the observation target, as at least part of the migration property scale. The evaluating a migration property of the migration property evaluating method may include not selecting an observation target having the reaching distance being less than or equal to a threshold as an observation target having a high migration property.
In the fifth aspect of the present invention, the calculating a migration property of the migration property evaluating method may include calculating a moving speed of the observation target as at least part of the migration property scale. The evaluating a migration property of the migration property evaluating method may include selecting, among a plurality of observation targets, each of which being the observation target, an observation target having the moving speed being equal to or greater than a threshold as an observation target having a high migration property.
In addition, In the sixth aspect of the present invention, a computer program having therein an instruction is provided. When executed by a processor or a programmable circuit, the instruction may cause the processor or the programmable circuit to perform operations including acquiring a plurality of images of a living body as an observation target obtained by capturing observation images of the observation target a plurality of times in chronological order. The instruction may include generating a moving trajectory of the observation target based on the plurality of images of the observation target. The instruction may include calculating a migration property by calculating a migration property scale representing a degree to which the observation target migrates in a certain direction based on the moving trajectory of the observation target. The instruction may include evaluating a migration property by evaluating whether the observation target satisfies a pre-defined condition based on the migration property scale of the observation target.

In the seventh aspect of the present invention, the calculating a migration property of the instruction may include calculating, based on the moving trajectory of the observation target, a distance between start and end points as at least part of the migration property scale, wherein the distance between start and end points is a straight-line distance from the start point to an end point of the trajectory of the observation target. The evaluating a migration property of the instruction may include selecting, among a plurality of observation targets, each of which being the observation target, an observation target having the distance between start and end points being equal to or greater than a threshold as an observation target having a high migration property.

In the eighth aspect of the present invention, the calculating a migration property scale of the instruction may include calculating, based on the moving trajectory of the observation target, a total moving distance of the observation target and/or a linearity of the moving trajectory, as at least part of the migration property scale. The evaluating a migration property of the instruction may include selecting, among a plurality of observation targets, each of which being the observation target, an observation target having the total moving distance being equal to or greater than a threshold and the linearity being equal to or greater than a threshold as an observation target having a high migration property.

In the ninth aspect of the present invention, the calculating a migration property of the instruction may include calculating a reaching distance from the start point to a farthest point farthest from the start point on the moving trajectory of the observation target, as at least part of the migration property scale. The evaluating a migration property of the instruction may include not selecting an observation target having the reaching distance being less than or equal to a threshold as an observation target having a high migration property.

In the tenth aspect of the present invention, the calculating a migration property of the instruction may include calculating a moving speed of the observation target as at least part of the migration property scale. The evaluating a migration property of the instruction may include selecting, among a plurality of observation targets, each of which being the observation target, an observation target having the moving speed being equal to or greater than a threshold as an observation target having a high migration property.

In addition, In the eleventh aspect of the present invention, a migration property calculating apparatus is provided. The migration property calculating apparatus may include a trajectory generating unit configured to generate a moving trajectory of a living body as an observation target based on a plurality of images of the observation target obtained by capturing observation images of the observation target a plurality of times in chronological order. The migration property calculating apparatus may include a migration property calculating unit configured to calculate a migration property scale representing a degree to which the observation target migrates in a certain direction based on the moving trajectory of the observation target.

In the twelfth aspect of the present invention, the migration property calculating apparatus may include a migration property evaluating unit configured to evaluating whether the observation target satisfies a pre-defined condition based on the migration property scale of the observation target.

In the thirteenth aspect of the present invention, the migration property calculating unit of the migration property calculating apparatus may be configured to calculate, based on the moving trajectory of the observation target, a distance between start and end points as at least part of the migration property scale, wherein the distance between start and end points is a straight-line distance from the start point to an end point of the trajectory of the observation target. The migration property evaluating unit of the migration property calculating apparatus may be configured to select, among a plurality of observation targets, each of which being the observation target, an observation target having the distance between start and end points being equal to or greater than a threshold as an observation target having a high migration property.

In the fourteenth aspect of the present invention, the migration property calculating unit of the migration property calculating apparatus may be configured to calculate, based on the moving trajectory of the observation target, a total moving distance of the observation target and/or a linearity of the moving trajectory, as at least part of the migration property scale. The migration property evaluating unit of the migration property calculating apparatus may be configured to select, among a plurality of observation targets, each of which being the observation target, an observation target having the total moving distance being equal to or greater than a threshold and the linearity being equal to or greater than a threshold as an observation target having a high migration property.

In the fifteenth aspect of the present invention, the migration property calculating unit of the migration property calculating apparatus may be configured to calculate, based on the moving trajectory of the observation target, a total moving distance of the observation target and a reaching distance from the start point to a farthest point farthest from the start point on the moving trajectory of the observation target, as at least part of the migration property scale. The migration property evaluating unit of the migration property calculating apparatus may not be configured to select an observation target having the reaching distance being less than or equal to a threshold as an observation target having a high migration property.

In the sixteenth aspect of the present invention, the migration property calculating unit of the migration property calculating apparatus may be configured to calculate a moving speed of the observation target as at least part of the migration property scale. The migration property evaluating unit of the migration property calculating apparatus may be configured to select, among a plurality of observation targets, each of which being the observation target, an observation target having the moving speed being equal to or greater than a threshold as an observation target having a high migration property.

The summary clause does not necessarily describe all necessary features of the embodiments of the present invention. In addition, the present invention may also be a sub-combination of the features described above.

BRIEF DESCRIPTION OF THE DRAWINGS

Fig. 1 shows an example of an apparatus configuration of a migration property evaluating apparatus according to the present embodiment.

Fig. 2 shows an example of a specific configuration of the migration property calculating apparatus according to the present embodiment.

Fig. 3 shows an example of a flow of a migration property evaluating method according to the present embodiment.

Fig. 4 shows an example of a flow of generating a plurality of images of an observation target at S210 according to the present embodiment.

Fig. 5 shows an example of a screen for confirming implementation progress of time-lapse imaging displayed on an output unit of the migration property evaluating apparatus according to the present embodiment.

Fig. 6 shows an example of a flow of generating a moving trajectory of the observation target at S220 according to the present embodiment.

Fig. 7A shows an example of a definition of a reference position of the observation target at S222 according to the present embodiment.

Fig. 7B shows an example of a definition of the reference position of the observation target at S222 according to the present embodiment.

Fig. 7C shows an example of a definition of the reference position of the observation target at S222 according to the present embodiment.

Fig. 8 shows an example of generating and outputting the trajectory of the observation target at S223 according to the present embodiment.

Fig. 9A shows an example of the moving trajectory of two observation targets according to the present embodiment.

Fig. 9B shows an example drawing obtained by plotting the moving trajectories of the two observation targets shown in Fig. 9A.

Fig. 10 shows an example of a flow of calculating a migration property scale of the observation target at S240 according to the present embodiment.

Fig. 11 shows an example of a flow of selecting an observation target having a high migration property to evaluate the migration property at S250 according to the present embodiment.

Fig. 12 shows an example of a flow of evaluating the observation target based on a threshold of a total moving distance at S252 according to the present embodiment.

Fig. 13 shows an example of a flow of evaluating the observation target based on a threshold of a linearity at S252 according to the present embodiment.

Fig. 14 shows an example of flow of evaluating the observation target based on a threshold of a total moving distance and a linearity at S252 according to the present embodiment.

Fig. 15 shows a modified example of a definition of a reference position of the observation target at S222 according to the present embodiment.

Fig. 16 shows a modified example of a flow of calculating the migration property scale of the observation target of S240 according to the present embodiment.

Fig. 17 illustrates a reaching distance at S246 according to the present embodiment.

Fig. 18 shows a modified example of a flow of evaluating the observation target at S252 according to the present embodiment.

Fig. 19 shows another modified example of a flow of calculating the migration property scale of the observation target at S240 according to the present embodiment.

Fig. 20 shows a modified example of a flow of evaluating the observation target at S252 according to the present embodiment.

Fig. 21 shows an example of a hardware configuration of a computer.

DESCRIPTION OF EXEMPLARY EMBODIMENTS

Hereinafter, the invention will be described through embodiments of the invention, but the following embodiments do not limit the invention according to claims. In addition, not all combination of the features described in the embodiments are necessary for the solution of the invention.

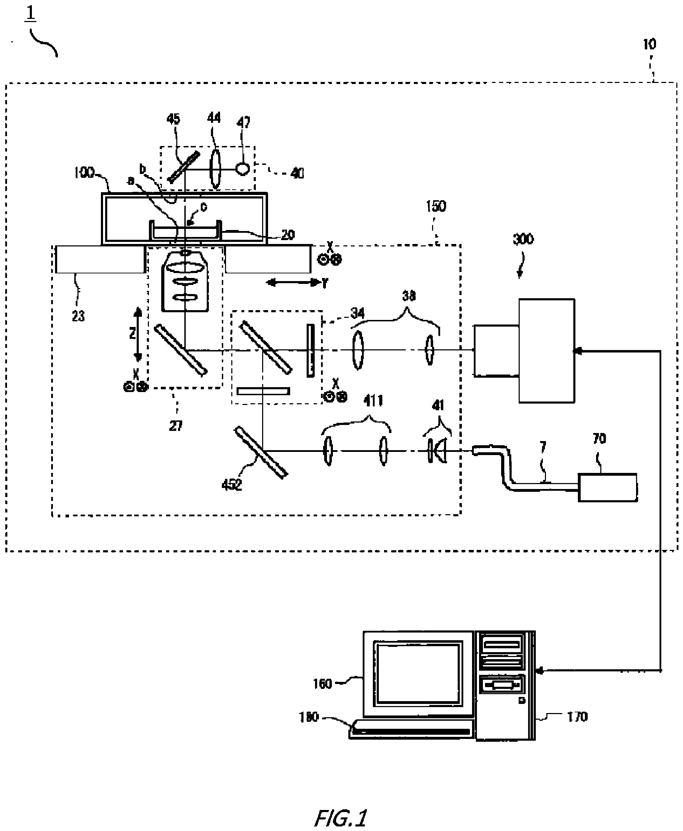

Fig. 1 shows an example of an apparatus configuration of a migration property evaluating apparatus according to the present embodiment. A migration property evaluating apparatus 1 according to the present invention is configured to eliminate an influence of spurious movement of an observation target to evaluate a migration property of the observation target based on the actual movement of the observation target. The migration property evaluating apparatus 1 includes an imaging apparatus 10, a migration property calculating apparatus 170, an output unit 160, and an input unit 180.

The imaging apparatus 10 is an apparatus configured to capture the image of a living body as the observation target to generate an image. The imaging apparatus 10 is configured to capture observation images of the living body as the observation target to generate a plurality of images of the observation target a plurality of times in chronological order. The imaging apparatus 10 includes a microscope portion 150, a camera 300, a transmitted illumination unit 40, a light source for excitation 70, and an optical fiber 7.

The microscope portion 150 is an apparatus for magnifying and observing the living body as the observation target using a microscope. The living body as the observation target may be a cell. In addition, the living body as the observation target may also be a microscopic living body capable of moving, other than a cell. By way of example, the living body as the observation target may be a microorganism, a fungus, an alga, a biological tissue or the like. The microscope portion 150 includes a stage 23, an objective lens portion 27, a fluorescent filter portion 34, an imaging lens portion 38, a polarized mirror 452, a field lens 411, and a collector lens 41.

On the stage 23, a chamber 100 is mounted. The chamber 100 includes a transparent culture dish 20. The culture dish 20 is filled with a culture medium, and cells are cultured in the culture medium. To observe fluorescence images, the cells may be labeled with one type or two or more types of fluorescent materials. A portion a of the bottom surface of the chamber 100 and a portion b of the upper surface of the chamber 100 may each be transparent. The upper surface of the chamber 100 may be opened or may be covered with a transparent lid. The upper surface or bottom surface of the chamber 100 being transparent or the upper surface of the chamber 100 being opened or covered with a transparent lid enables providing a culturing environment suitable for observing the living body as the observation target.

The objective lens portion 27 includes a plurality of objective lens in an x axis direction of Fig. 1 (a direction perpendicular to the paper surface). The objective lens arranged in the optical path of the imaging apparatus 10 are changed by moving the objective lens portion 27 in the x axis direction. Thus, the type and magnification of the objective lens can be changed.

The fluorescent filter portion 34 includes a plurality of types of filter blocks in the x axis direction of Fig. 1. The filter blocks arranged in the optical path of the imaging apparatus 10 are changed by moving the fluorescent filter portion 34 in the x axis direction.

The transmitted illumination unit 40 is a light source unit used when performing phase difference observation on the observation target. The transmitted illumination unit 40 includes a light source for transmitted illumination 47, a field lens 44, and a polarized mirror 45. The transmitted illumination unit 40 is configured to expose the observation target to a transmitted light.

The light source for excitation 70 is a light source used when performing fluorescence observation on the observation target. The light source for excitation 70 is configured to expose the observation target to light to be reflected, via the microscope portion 150.

The optical fiber 7 is a component configured to introduce a light emitted from the light source for excitation 70 into the microscope portion 150.

The migration property calculating apparatus 170 is connected to the imaging apparatus 10 and configured to control the imaging apparatus 10. The migration property calculating apparatus 170 is configured to change the combination of the type of the objective lens of the objective lens portion 27 and/or the type of the filter block of the fluorescent filter portion 34 that are arranged in the optical path of the imaging apparatus 10. For example, for the phase difference observation and the fluorescence observation, both the type of the filter block and the type of the objective lens that are arranged in the optical path are different. In addition, for a pair of two types of fluorescence observation, only the type of filter block arranged in the optical path is different. In addition, for the phase difference observation and the fluorescence observation, the used light source (the transmitted illumination unit 40 and the light source for excitation 70) are different. Thus, the inside of the migration property calculating apparatus 170 (for example, an imaging apparatus controlling unit 171 described below) may be configured to change one or more of the filter block, objective lens, and the light source, based on which observation of phase difference observation and one type or two or more types of fluorescence observation is performed.

When the phase difference observation is performed, the migration property calculating apparatus 170 is configured to turn on a light source for transmitted illumination 47 and turn off the light source for excitation 70 to enable the optical path of the transmitted illumination unit 40. When the phase difference observation is performed, the light emitted from the light source for transmitted illumination 47 is configured to illuminate an observation point c of the culture dish 20 through the field lens 44, the polarized mirror 45, and the upper portion b of the chamber 100. The light transmitted by the observation point c reaches a light receiving surface of the camera 300 through the bottom surface of the culture dish 20, the bottom a of the chamber 100, the objective lens portion 27, the fluorescent filter portion 34, and an the imaging lens portion 38. Then, a phase difference picture at the observation point c of the culture dish 20 is formed in the camera 300. The camera 300 is configured to capture the phase difference picture and generate an image. The generated image data may be recorded in the inside (for example, a recording unit 190 described below) of the migration property calculating apparatus 170 and/or output to the output unit 160.

When the fluorescence observation is performed, the migration property calculating apparatus 170 is configured to turn on the light source for excitation 70 and turn off the light source for transmitted illumination 47 to enable the optical path of the light source for excitation 70. When the fluorescence observation is performed, the light emitted from the light source for excitation 70 is configured to illuminate the observation point c of the culture dish 20 through the optical fiber 7, the collector lens 41, the field lens 411, the polarized mirror 452, the fluorescent filter portion 34, the objective lens portion 27, the bottom a of the chamber 100, and the bottom surface of the culture dish 20. When the cell cultured in the culture dish 20 is fluorescently labeled, the fluorescent material of the cell at the observation point c is excited, and fluorescence is emitted. The fluorescence emitted from the cell reaches the light receiving surface of the camera 300 through the bottom surface of the culture dish 20, the bottom a of the chamber 100, the objective lens portion 27, the fluorescent filter portion 34, and the imaging lens portion 38. Then, a fluorescent picture at the observation point c of the culture dish 20 is formed in the camera 300. The camera 300 is configured to capture the fluorescent picture and generate an image. The generated image data may be recorded in the inside of the migration property calculating apparatus 170 (for example, a recording unit 190 described below) and/or output to the output unit 160.

The camera 300 includes an imaging sensor (not shown). The camera 300 may be a cooling camera. The cooling camera is a camera that can cool the imaging sensor to suppress the noise generated by heat. The imaging sensor may be a CMOS imaging sensor (Complementary Metal Oxide Semiconductor) or a CCD imaging sensor (Charge Coupled Device). In addition, to focus the camera 300 for capturing an image, the migration property calculating apparatus 170 is configured to control the x-coordinate and y-coordinate of the stage 23 and the z-coordinate of the objective lens portion 27. In addition, the camera 300 may be housed in a housing different from the imaging apparatus 10.

To the chamber 100, a humidifier (not shown) may be connected through a silicone tube. The connected humidifier enables the migration property calculating apparatus 170 to control the humidity and carbon dioxide concentration inside the chamber 100 to be close to a value suitable for culturing cells. In addition, the chamber 100 also includes a heat exchanger (not shown). With the heat exchanger, the chamber 100 can control the temperature inside the chamber 100 to be close to a value suitable for culturing cells. The humidity, carbon dioxide concentration, and temperature inside the chamber 100 are measured by a sensor (not shown). The measurement result is sent to the migration property calculating apparatus 170.

In addition to controlling the imaging apparatus 10, the migration property calculating apparatus 170 is configured to receive, from the imaging apparatus 10, a plurality of images of the observation target captured by the imaging apparatus 10, generate a moving trajectory of the observation target based on the plurality of images, and calculate a migration property scale representing a degree to which the observation target migrates in a certain direction based on the trajectory. The configuration of the migration property calculating apparatus 170 will be described below.

The output unit 160 is configured to output the processing result of the migration property calculating apparatus 170. For example, the output unit 160 is configured to output the result of evaluating the migration property of the observation target. For example, the output unit 160 is a monitor connected to the migration property calculating apparatus 170.

The input unit 180 is configured to input an instruction, data or the like from an observer into the migration property calculating apparatus 170. For example, the input unit 180 is configured to input an instruction from the observer related to a condition for capturing the image of the observation target. In addition, the input unit 180 is configured to input a threshold of a migration property scale from the observer. For example, the input unit 180 is a keyboard or a mouse connected to the migration property calculating apparatus 170.

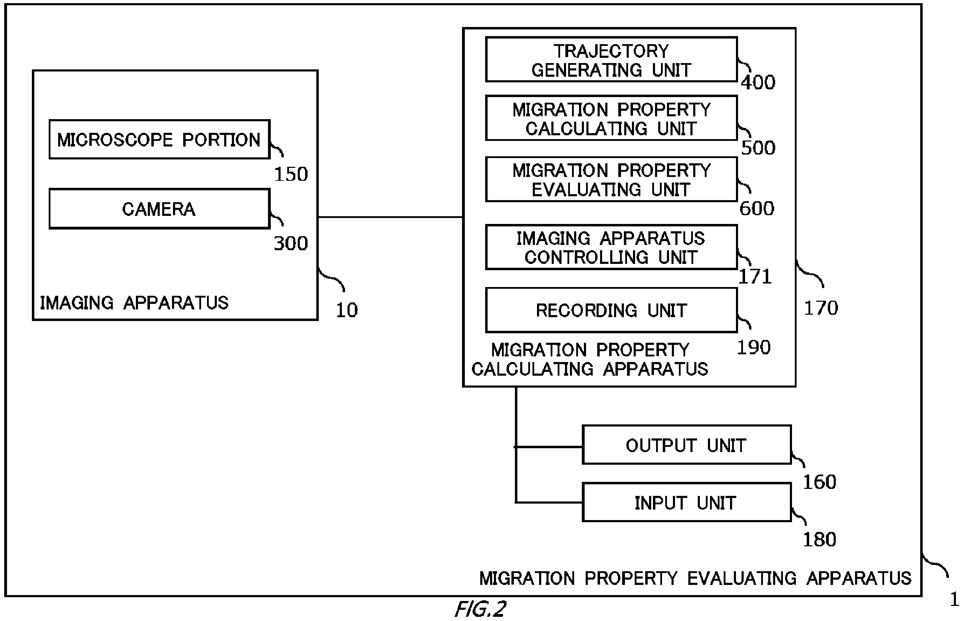

Fig. 2 shows an example of a specific configuration of the migration property calculating apparatus 170 according to the present embodiment. The migration property calculating apparatus 170 includes an imaging apparatus controlling unit 171, a recording unit 190, a trajectory generating unit 400, a migration property calculating unit 500, and a migration property evaluating unit 600. The recording unit 190 may be a memory, built-in hard disk drive, or an external recording medium, but not limited thereto. The migration property calculating apparatus 170 has a central processing unit (CPU), which executes a computer program recorded on the recording unit 190, and thus realizes the imaging apparatus controlling unit 171 or the like.

The imaging apparatus controlling unit 171 is configured to control the objective lens portion 27, the fluorescent filter portion 34, the transmitted illumination unit 40, the light source for excitation 70, the camera 300 and the like described in Fig. 1. For example, when an imaging condition for time-lapse imaging of the observation target is input into the input unit 180, the imaging apparatus controlling unit 171 is configured to follow the input imaging condition to perform adjustments, necessary for each imaging, of changing the type of the objective lens of the objective lens portion 27 in the microscope portion 150, changing the light source for transmitted illumination 47 and the light source for excitation 70, changing the type of the fluorescence filter of the fluorescent filter portion 34, and adjusting the position of the stage 23 or the height of the objective lens of the objective lens portion 27. After the imaging apparatus controlling unit 171 has performed necessary adjustments, the camera 300 is configured to capture images of the observation target and generate images of the observation target. The camera 300 is configured to send the generated image data to the trajectory generating unit 400. In addition, the generated image data may also be recorded in the recording unit 190 and/or output to the output unit 160.

The trajectory generating unit 400 is configured to generate a moving trajectory of the observation target from the images captured by the imaging apparatus 10. The method for generating the trajectory in detail will be described below.

The migration property calculating unit 500 is configured to calculate a migration property scale representing a degree to which the observation target migrates in a certain direction based on the generated trajectory. The migration property scale may include at least one or more of, for example, a distance between start and end points of the trajectory of the observation target, a linearity of the trajectory, a total moving distance of the trajectory, a reaching distance, or a moving speed. The migration property scale in detail will be described below.

The migration property evaluating unit 600 is configured to evaluate the migration property of the observation target based on the migration property scale of the observation target. For example, the migration property evaluating unit 600 is configured to evaluate whether the observation target satisfies a pre-defined condition based on the migration property scale. For example, the migration property evaluating unit 600 may evaluate the migration property of the observation target based on whether the migration property scale calculated by the migration property calculating unit 500 is equal to or greater than a threshold. At this time, the migration property evaluating unit 600 may use a threshold input from the input unit 180 by the observer, for the evaluation. The migration property evaluating unit 600 may record the evaluation result of the migration property in the recording unit 190 and/or output it to the output unit 160.

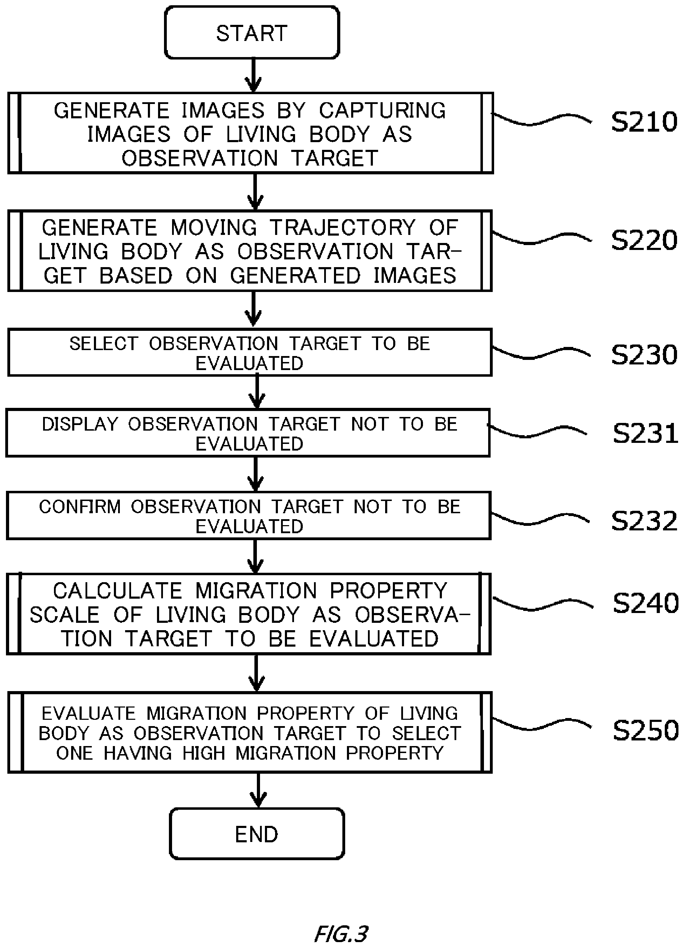

Fig. 3 shows an example of a flow of a method for evaluating a migration property of an observation target according to the present embodiment. The migration property of the observation target of the present embodiment can be evaluated by performing the processing of S210 to S250 in Fig. 3. Note that, for convenience of description, the processing of S210 to the processing of S250 will be described in order; however, at least some processing may be executed in parallel, and each step may be interchanged and executed within a range not deviating from the spirit of the present invention.

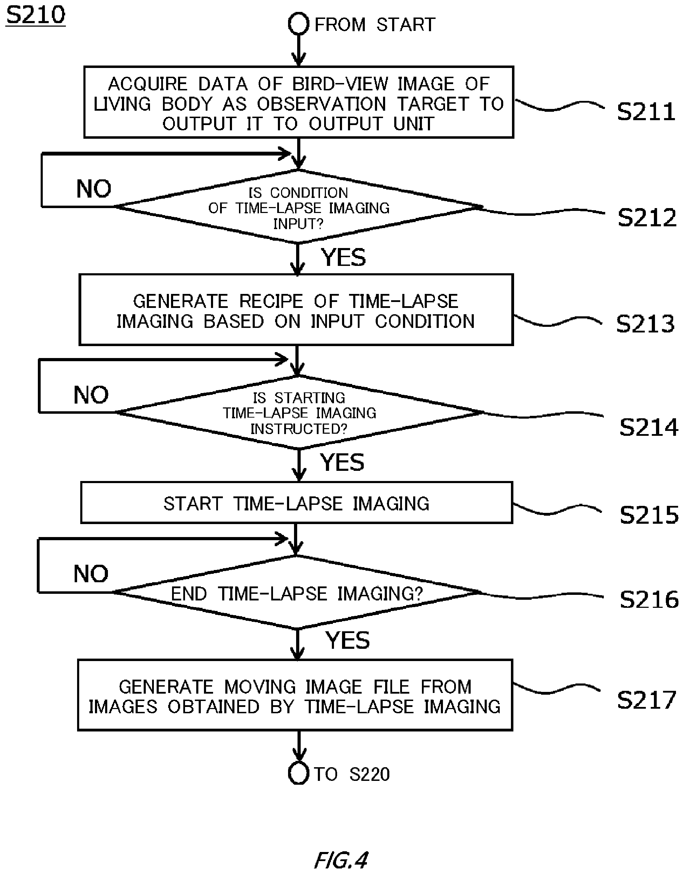

First, at S210, the imaging apparatus 10 generates a plurality of images by capturing images of a living body as the observation target. At S210, the step of generating a plurality of images by capturing a living body as the observation target includes steps of S211 to S217 as shown in Fig. 4.

Fig. 4 shows S210 in the flow. First, at S211, the imaging apparatus controlling unit 171 sets the phase difference observation at a low magnification as the observation method, and the imaging apparatus 10 captures an image of the observation target. Thus, the imaging apparatus 10 acquires a bird-view image, which is an image of a relatively wide region. Instead of the observation at a low magnification, the imaging apparatus 10 may acquire a bird-view image by obtaining one image (composite image) by compositing a plurality of images (tile images) acquired through performing phase difference observation while the imaging apparatus controlling unit 171 moves the observation point c of the culture dish 20 in the x-y plane. The imaging apparatus 10 may save the data of the acquired bird-view image in the recording unit 190 and/or output it to the output unit 160. After acquiring the bird-view image, the imaging apparatus controlling unit 171 allows the process to proceed to S212.

Then, at S212, the imaging apparatus controlling unit 171 receives an input related to the condition of time-lapse imaging from an observer through the input unit 180. The condition of time-lapse imaging may be determined by the observer based on the bird-view image output to the output unit 160. The condition of time-lapse imaging may be one or more of the interval, the number of rounds, the observation point, or the observation method, but not limited thereto. If the condition of time-lapse imaging is input into the input unit 180, in response to said input, the imaging apparatus controlling unit 171 may allow the process to proceed to S213. If the condition of time-lapse imaging is not input, the imaging apparatus controlling unit 171 may request the observer to input the condition through the output unit 160.

Then, at S213, the imaging apparatus controlling unit 171 may generate a recipe in which a condition is written based on the condition of the input time-lapse imaging. The imaging apparatus controlling unit 171 may record the generated recipe in the recording unit 190 and/or output it the output unit 160. In the recipe, information related to one or more of the interval, the number of rounds, the observation point or the observation method of the time-lapse imaging may be included. After the recipe generation, the imaging apparatus controlling unit 171 allows the process to proceed to S214.

Then, at S214, the imaging apparatus controlling unit 171 may receive an instruction of starting the time-lapse imaging from the observer through the input unit 180. If the start of the time-lapse imaging is instructed, in response to said instruction, the imaging apparatus controlling unit 171 may allow the process to proceed to S215. If the start of the time-lapse imaging is not instructed, the imaging apparatus controlling unit 171 may request the observer to instruct the start through the output unit 160. Alternatively, if the start of the time-lapse imaging is not instructed, the imaging apparatus controlling unit 171 may request the observer to input a condition of time-lapse imaging different from the condition input previously through the output unit 160.

Then, at S215, the imaging apparatus controlling unit 171 instructs the camera 300 to start time-lapse imaging of the observation target. The time-lapse imaging is performed in accordance with the recipe generated in S213. The imaging apparatus controlling unit 171 adjusts the position of the observation point c of the culture dish 20 in accordance with the observation point described in the recipe. In addition, if the observation methods described in the recipe are three types (for example, phase difference observation, green fluorescence observation, and red fluorescence observation), the imaging apparatus controlling unit 171 may instruct the camera 300 to acquire three types of images continuously while appropriately changing the illumination, the filter block, and the objective lens in accordance with the observation method described in the recipe. The camera 300 acquires three types of images, and then imaging for the first round ends.

Then, the imaging apparatus controlling unit 171 instructs the camera 300 to wait for an interval described in the recipe from a starting time of the first round of imaging in accordance with the generated recipe, and after that, to perform the second round of imaging in the same way as the first round of imaging. In this manner, the camera 300 repeats the above-described imaging until reaching the number of rounds described in the recipe.

Then, at S216, if the number of rounds of the time-lapse imaging described in the recipe has been reached, the imaging apparatus controlling unit 171 instructs the camera 300 to end imaging. If the number of rounds of the time-lapse imaging described in the recipe is not reached, the imaging apparatus controlling unit 171 repeats the above-described imaging by the camera 300 until the specified number of rounds is reached. After ending the time-lapse imaging, the imaging apparatus controlling unit 171 allows the process to proceed to S217.

During the time-lapse imaging, the imaging apparatus controlling unit 171 accumulates data of images captured by the imaging apparatus 10 in an implementation progress file. The imaging apparatus controlling unit 171 records the implementation progress file in the recording unit 190. In addition, when an instruction to confirm implementation progress is input by the observer during or after imaging of the time-lapse imaging, the imaging apparatus controlling unit 171 refers to the content of the implementation progress file at the time point of the inputting, and outputs a screen for confirming implementation progress to the output unit 160.

Then, at S217, the imaging apparatus controlling unit 171 couples a plurality of images included in the implementation progress file to generate moving image files. The imaging apparatus controlling unit 171 causes the output unit 160 to display a screen for confirming implementation progress of time-lapse imaging including a video of the generated moving image files.

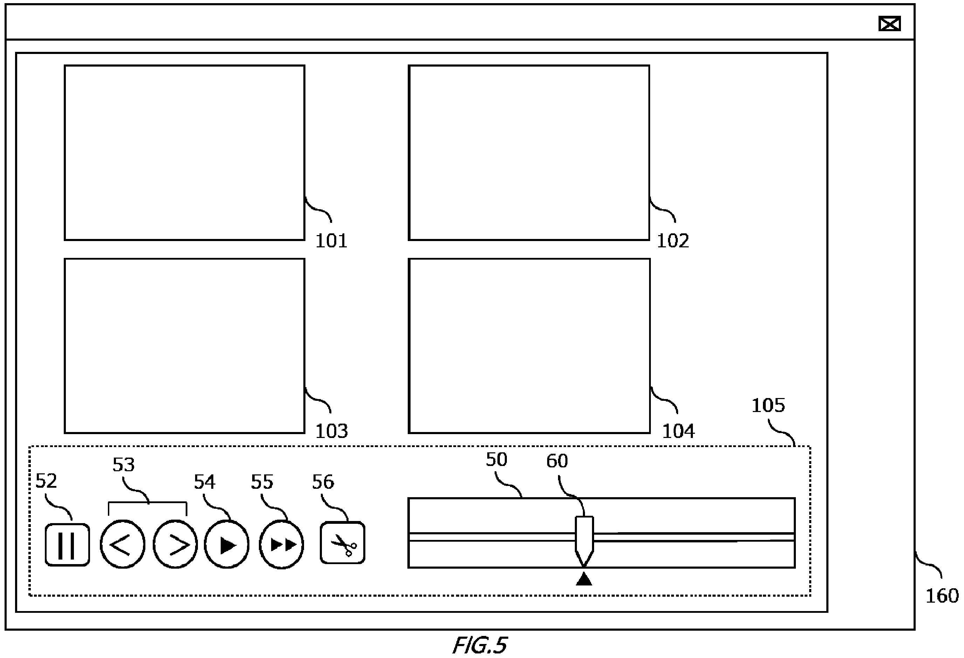

Fig. 5 shows an example of a screen for confirming implementation progress displayed on the output unit 160.

The imaging apparatus controlling unit 171 may cause the output unit 160 to display a screen for confirming implementation progress of time-lapse imaging including display regions 101, 102, 103, and 104 and a playback controlling portion 105. The imaging apparatus controlling unit 171 couples images at each round of time-lapse imaging for each observation method in chronological order to generate moving image files. For example, the imaging apparatus controlling unit 171 may generate moving images of phase difference images from a plurality of phase difference images and/or generate moving images of fluorescence images from a plurality of fluorescence images. In addition, or alternatively, the imaging apparatus controlling unit 171 may composite phase difference images and fluorescence images for each frame and couple each frame after the composition in chronological order to generate moving images of composite images. The imaging apparatus controlling unit 171 may cause at least one or more of the display regions 101, 102, 103 or 104 to each display the generated moving images and/or record it in the recording unit 190.

The imaging apparatus controlling unit 171 may read out the generated moving image files simultaneously and concurrently, generate moving image signals to cause the output unit 160 to display the moving images, and send the moving image signals to the output unit 160 in the order of generation to cause at least one of the display regions 101, 102, 103 or 104 to display the moving images. This series of processing of reading out the moving image files, generating the moving image signals and sending the moving image signals performed by the imaging apparatus controlling unit 171 is also described as "playback of moving image files".

The playback controlling portion 105 is a GUI (Graphic User Interface) image used by the observer to input an instruction related to the playback of the moving image files. In the playback controlling portion 105, a pause button 52, a skipping button 53, a playback button 54, a fast-forward button 55, a clipping button 56, and a timeline 50 are arranged.

When the playback button 54 is selected by the observer through the input unit 180, the playback of a moving image file may be started, and the display of moving images on at least one of the display regions 101, 102, 103 or 104 may be started. When the pause button 52 is selected by the observer, playback of a moving image is paused. The playback location in a moving image file is reflected to the timeline 50. The left end of the timeline 50 represents the top of the moving image file, that is, the start time point of time-lapse imaging, and the right end of the timeline 50 represents the end of the moving image file, that is, the end time point of time-lapse imaging. When time-lapse imaging is not ended, the right end of the timeline represents the current time point.

On the timeline 50, a slider bar 60 is arranged. Slider bar 60 may represent the playback location in the moving image file in real-time. The position of the slider bar 60 in the horizontal direction may be capable of being moved freely by the observer. When the position of the slider bar 60 in the horizontal direction is moved by the observer, the playback location of the moving image file changes.

When time-lapse imaging is performed for a long time, the volume of the generated moving image file is considerably large. The imaging apparatus controlling unit 171 may reduce the volume of the moving image file by using an approach of time clipping or space clipping.

The time clipping is a method to form a moving image file by clipping a particular time period of the time-lapse imaging only. For example, the imaging apparatus controlling unit 171 may generate a moving image file by using a plurality of images generated in a particular period in the period of time-lapse imaging. For example, the imaging apparatus controlling unit 171 may generate a moving image file by using a plurality of images thinned out at a specific time interval among a plurality of images generated in the period of time-lapse imaging. The time interval for the thinning out may be constant. The time interval for the thinning out may not necessarily be constant, for example, every ten minutes in the first hour, every fifteen minutes in the next hour or the like.

When the clipping button 56 is selected by the observer, the imaging apparatus controlling unit 171 may cause the output unit 160 to display a screen for clipping specification. The imaging apparatus controlling unit 171 receives an input related to a period for performing time clipping or a time interval for the thinning out by the observer through the input unit 180.

The space clipping is a method to generate a moving image file by clipping a particular spatial region of the time-lapse imaging only. For example, the imaging apparatus controlling unit 171 generates a moving image file by using a plurality of images where only a particular region is cut out, among a plurality of images generated in the period of time-lapse imaging.

When the clipping button 56 is selected by the observer, the imaging apparatus controlling unit 171 may cause the output unit 160 to display clipping frames. The imaging apparatus controlling unit 171 receives an input related to an aimed cut-out region among the displayed clipping frames by the observer through the input unit 180. By receiving an input related to an aimed cut-out region from the input unit 180, the imaging apparatus controlling unit 171 can perform space clipping centered around this region.

As described above, a moving image file can be generated from a plurality of images obtained by time-lapse imaging. After the moving image file is generated, the imaging apparatus controlling unit 171 allows the process to proceed to S220. Note that, S217 may be a step performed as needed. At S216, after time-lapse imaging ends, the step of S217 may be skipped, and the process may proceed to S220. In addition, within a range not deviating from the spirit of the present invention, some steps of S211 to S216 may be omitted.

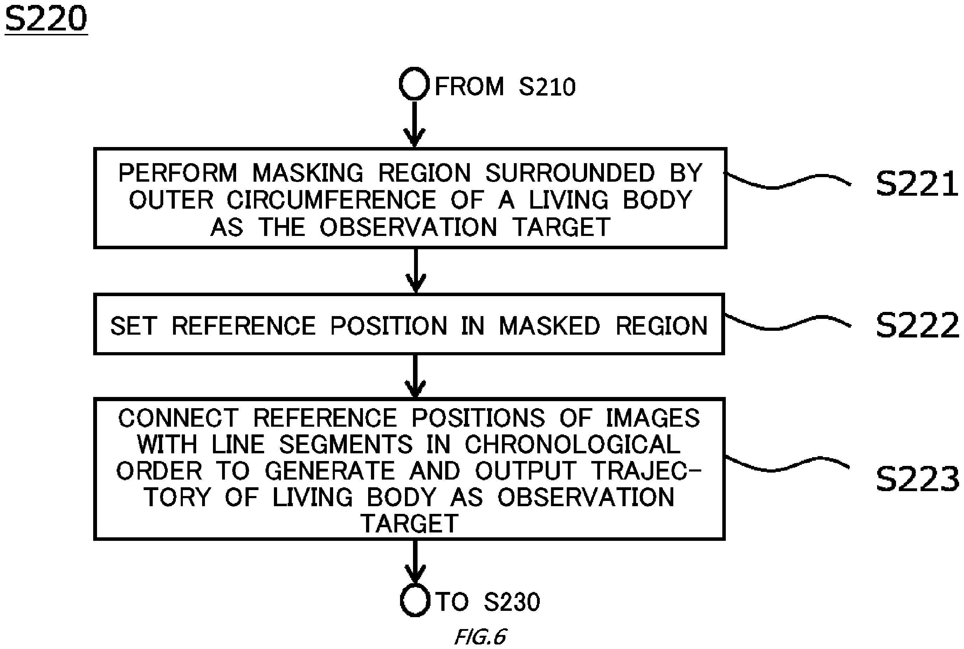

Then, at S220, the trajectory generating unit 400 generates a moving trajectory of a living body as the observation target of based on a plurality of images generated by capturing images of the observation target included in the moving image file a plurality of times in chronological order. At S220, based on the plurality of images, the step of the generating the moving trajectory of the living body as the observation target includes steps of S221 to S223 as shown in Fig. 6.

Fig. 6 shows S220 in the flow. First, at S221, the trajectory generating unit 400 performs masking on a portion surrounded by an outer circumference of a living body as the observation target in each of the plurality of images included in the moving image file. The trajectory generating unit 400 performs masking of the observation target by extracting the outer circumference of the observation target in each of the plurality of images and masking the inside of the region surrounded by the outer circumference. For example, the trajectory generating unit 400 may extract the outer circumference of the observation target in a conventionally known method such as an approach using binarization, after applying distributed filter. After masking the observation target, the trajectory generating unit 400 allows the process to proceed to S222.

Then, at S222, the trajectory generating unit 400 sets a reference position for generating a trajectory in the masked region of the observation target. The trajectory generating unit 400 sets a reference position by a unified definition for the masked region of each observation target of the plurality of images. The trajectory generating unit 400 may use a barycenter, a center, an end or the like of the masked region, as a definition of the reference position.

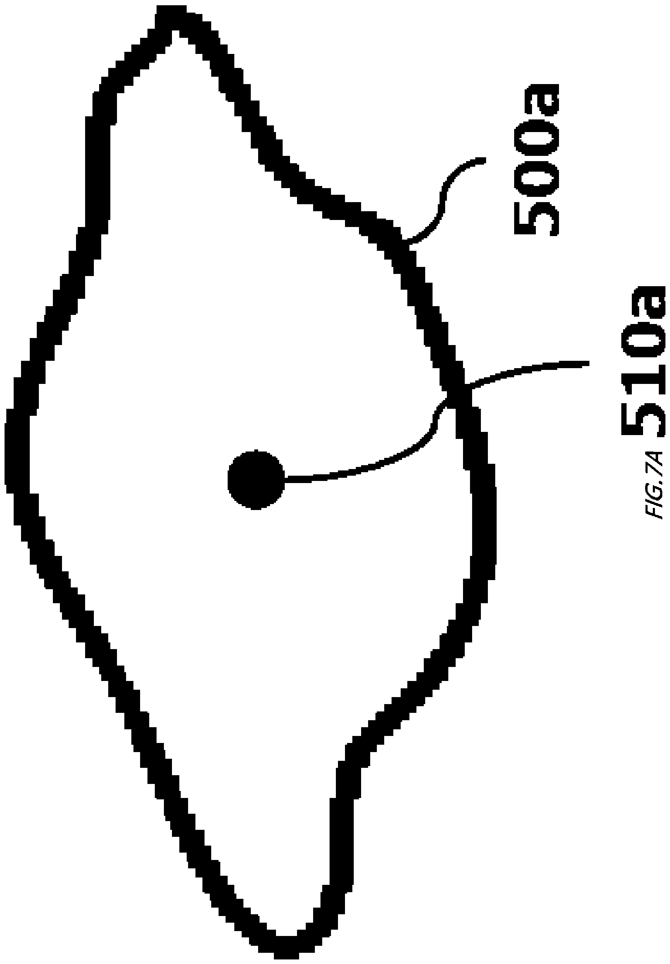

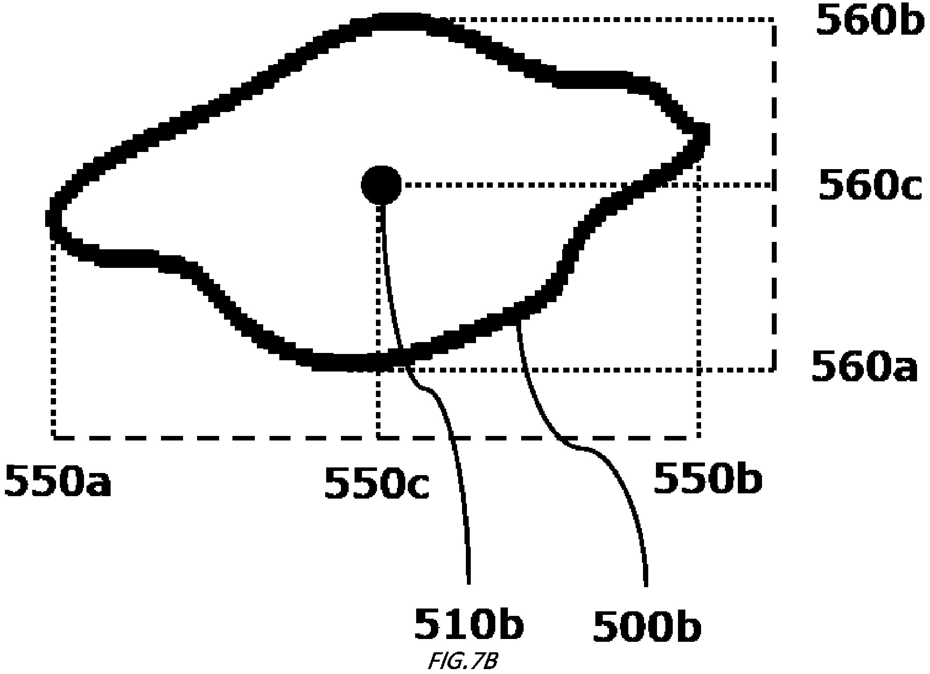

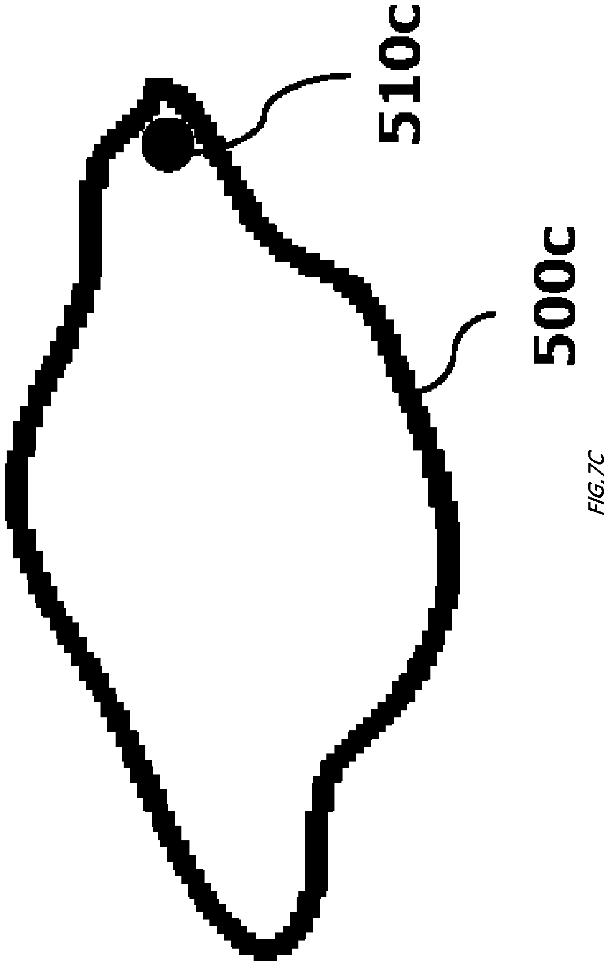

Fig. 7A, 7B, and 7C are the examples of the definition of the reference position set in a masked region of the observation target. In Fig. 7A, the barycenter 510a of a masked region 500a of the observation target is set as a reference position. The trajectory generating unit 400 may calculate the barycenter 510a in a well-known method. For example, the trajectory generating unit 400 may place the observation target on a xy coordinate plane, calculate $x_{mean}$ and $y_{mean}$ that are averages of coordinate values of all pixels included in the masked region 500a for each of the x axis direction and the y axis direction, and set the obtained point ($x_{mean}$, $y_{mean}$) as the barycenter 510a.

In Fig. 7B, a center 510b of a masked region 500b of the observation target is set as the reference position. The trajectory generating unit 400 may calculate the center 510b in a well-known method. The trajectory generating unit 400 places the observation target on the xy coordinate plane and calculates 550c, which is an average value of the minimum value 550a and the maximum value 550b of the x axis of the masked region 500b. In addition, in the same way, the trajectory generating unit 400 also calculates 560c, which is an average value of the minimum value 560a and the maximum value 560b of the y axis of the masked region. The trajectory generating unit 400 may set the obtained point (550c, 560c) as the center 510b.

In Fig. 7c, the observation target sets an end of the masked region as the reference position. For example, the trajectory generating unit 400 may place the observation target on the xy coordinate plane and set, as the reference position, the point being an end in a pre-defined direction (+ direction or - direction) on the x axis or y axis among the points on the outer circumference of the observation target.

The trajectory generating unit 400 may acquire, as the end, a point being the most tip in a direction to which the cell migrates. For example, the trajectory generating unit 400 may calculate a movement vector of the cell at each time point of moving trajectory and place the observation target on the xy coordinate plane, and set a point being an end in + direction of the movement vector among points on the outer circumference of the observation target as the reference position (the most tip point). Here, the trajectory generating unit 400 may acquire the movement vector by connecting the barycenter or the center of the observation target at this time point and the barycenter or the center of the observation target at a predetermined number of previous time point (for example, one previous time point).

The trajectory generating unit 400 may set a position defined by using a definition other than (A), (B), and (C) above as the reference position. For example, the trajectory generating unit 400 may cause the living body as the observation target to express fluorescent labeling of a protein and set a position where said protein having the fluorescent labeling exists as the reference position. In addition, the trajectory generating unit 400 may also set the barycenter (such as the average or the weighted barycenter) of a point identified by the plurality of definitions above as the reference position. After setting the reference position, the trajectory generating unit 400 allows the process to proceed to S223.

Then, at S223, the trajectory generating unit 400 connects the reference positions of the plurality of images with line segments in chronological order to generate and output the trajectory of the living body as the observation target.

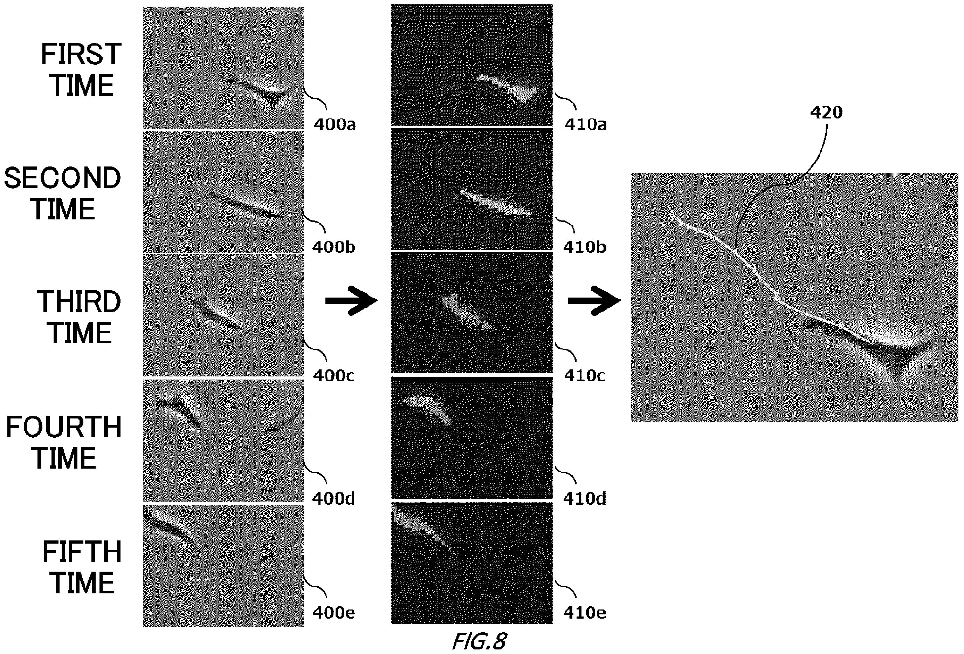

Fig. 8 is an example of connecting the reference positions of images captured in a period from the first time to the fifth time with line segments in chronological order to generate the moving trajectory of the observation target. In the left column of Fig. 8, images 400a to 400e are respective phase difference images of a mesenchymal stem cell for the first time to the fifth time. For example, the images 400a to 400e are displayed on the display region 101 of Fig. 5. In the middle column of Fig. 8, images 410a to 410e are respective images obtained by performing masking on the images 400a to 400e. The trajectory generating unit 400 sets the reference positions for the image 410a to 410e, where masking has been performed. For example, the reference position may be the barycenter of the masked region. The trajectory generating unit 400 may connect the reference positions in chronological order from the first time to the fifth time with line segments to generate the moving trajectory 420 of the observation target as shown in the right column of Fig. 8. In this manner, the moving trajectory of the generated reference positions may be used as the moving trajectory of the observation target. The trajectory generating unit 400 may output the moving trajectory 420 of the observation target to the display region 102 of Fig. 5 and/or record it in the recording unit 190. Note that although a mesenchymal stem cell is used as the observation target herein, a cell other than the mesenchymal stem cell is also suitably used as the observation target. In addition, the number of the living bodies as the observation targets used to generate and output their trajectories may be one or may be plural.

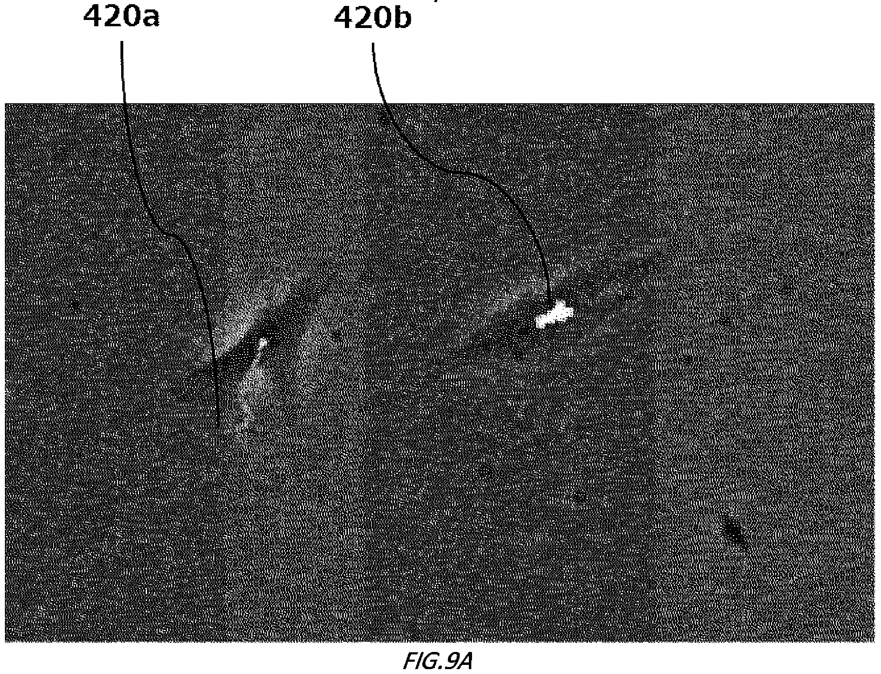

Fig. 9A is an example of moving trajectories of two observation targets. The trajectory generating unit 400 generates moving trajectories 420a and 420b respectively for the cell on the left side and the cell on the right side and outputs them to the display region 102.

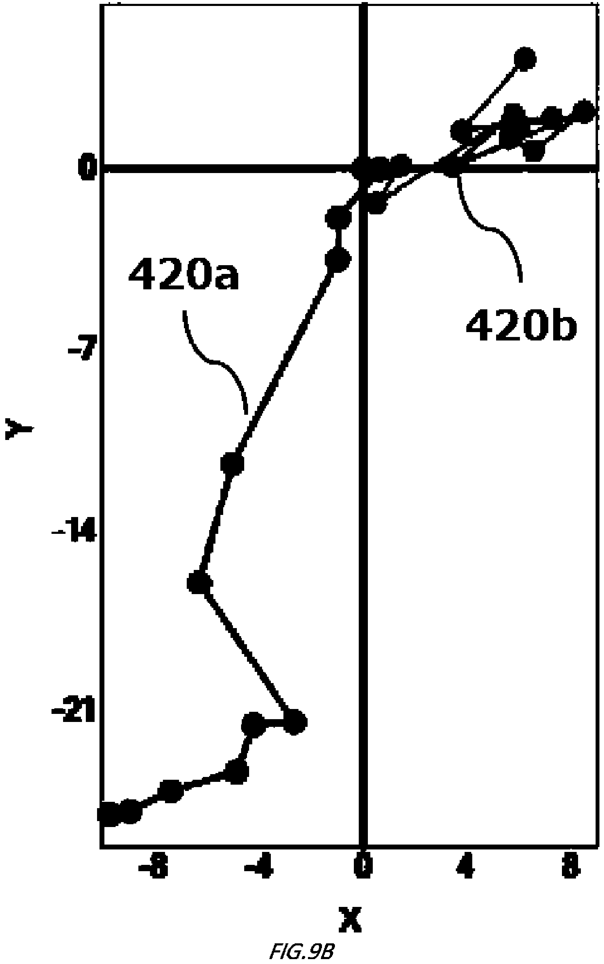

Fig. 9B is an example drawing obtained by plotting the moving trajectories of the two observation targets shown in Fig. 9A. The trajectory generating unit 400 may plot the generated trajectories 420a and 420b on the xy coordinates as shown in Fig. 9B and output them to the display region 103. After generating the moving trajectories of the observation targets, the trajectory generating unit 400 allows the process to proceed to S230.

Here, the cell moving along the trajectory 420a (the cell on the left) actually moves in a certain direction, and it can be considered that the degree of the migration is high. On the other hand, the cell moving along the trajectory 420b (the cell on the right) does not move significantly from the same place and merely changes its shape, and it cannot be considered that it substantially migrates. However, because the movement for changing the shape is evaluated as the movement of the barycenter or the like little by little, if just the movement amount (total moving distance) is considered for making determination, the migration property of the cell on the right can be evaluated to be in the same degree as that of the cell on the left. As described below, according to the present embodiment, the cell on the left can be evaluated to have a high migration property, and the cell on the right can be evaluated as having a low migration property.

Then, at S230, the trajectory generating unit 400 receives an input of selecting an observation target to be evaluated from the observer through the input unit 180. For example, an observation target for which the reference positions are set in all of the plurality of images included in a moving image file and trajectories are generated may be selected as the one to be evaluated by the observer. Alternatively, an observation target shown in clear contrast relative to the background in all of the plurality of images included in a moving image file may be selected as the one to be evaluated by the observer. Alternatively, an observation target not overlapping with an adjacent observation target in all of the plurality of images included in a moving image file may be selected as the one to be evaluated by the observer. Alternatively, an observation target not having experienced cell division in all of the plurality of images included in a moving image file may be selected as the one to be evaluated by the observer. Alternatively, the selection of the observation target may be performed by the migration property calculating apparatus 170 automatically. Note that, the step of S230 may be performed just after the step of S210 is performed. After the observation target to be evaluated is selected, the trajectory generating unit 400 allows the process to proceed to S231.

Then, at S231, the trajectory generating unit 400 causes the output unit 160 to display observation target not to be evaluated as to the migration property. For example, the observation target not to be evaluated is the observation target not selected as the one to be evaluated at the step of S230. The observation target not to be evaluated is displayed on the display region 104 of Fig. 5. The display region 104 may display the observation target not to be evaluated in chronological order. After the observation target not to be evaluated as to the migration property is displayed, the trajectory generating unit 400 allows the process to proceed to S232.

Then, at S232, the trajectory generating unit 400 request the observer to confirm the observation target not to be evaluated. For example, the trajectory generating unit 400 may request the observer to confirm the displayed images on the display region 104 to determine whether observation targets in the images are not to be evaluated. If the determination that an observation target is the one not to be evaluated is input by the observer, the trajectory generating unit 400 may not perform the step of S240 and the following steps on said observation target. If the determination that an observation target is the one to be evaluated is input by the observer, the trajectory generating unit 400 may perform the step of S240 and the following steps on said observation target. If an observation target is determined to be the one to be evaluated by the observer, the trajectory generating unit 400 may perform the step of S240 and the following steps on said observation target after the trajectory of said observation target is manually modified by the observer based on the image displayed on the display region 104.

Note that, some or all of S230 to S232 may be omitted. For example, at S230, after selecting the observation target to be evaluated, the trajectory generating unit 400 may allow the process to proceed to S240, skipping the steps of S231 and S232.

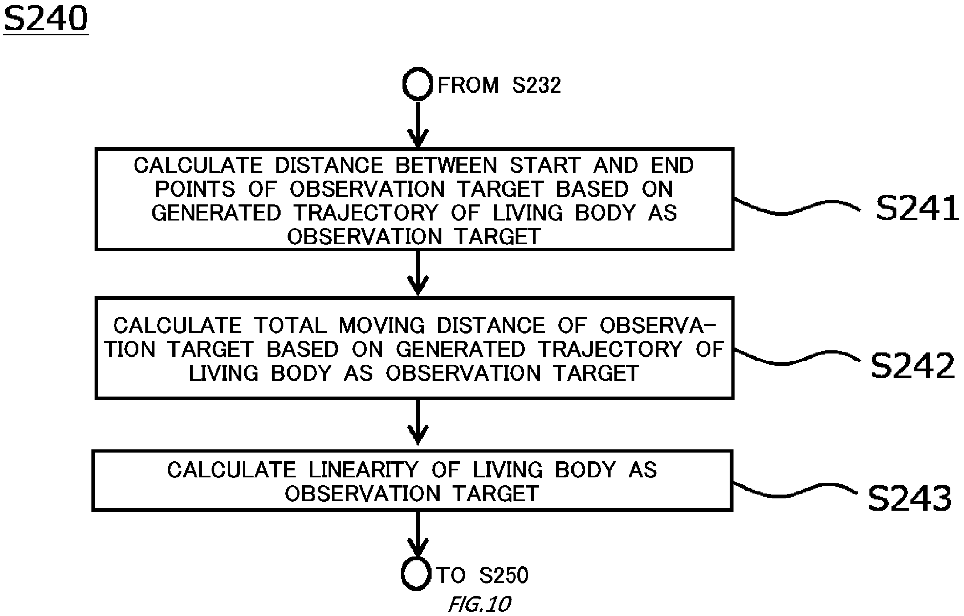

Then, at a step of S240, the migration property calculating unit 500 calculates the migration property scale of the living body as the observation target to be evaluated. At S240, the step of calculating the migration property scale of the living body as the observation target to be evaluated includes steps of S241 to S243 as shown in Fig. 10. Here, the migration property scale is what represents a degree to which the observation target migrates in a certain direction. For example, cells that migrate include (1) one that moves in an almost certain direction (for example, a direction toward an attractant or the like, or a direction away from a repellent or the like) at least over a certain time or more and (2) one that repeats changing the shape at the same place and/or moves actively but within a certain small region and that is evaluated as the one that does not performs substantial movement (that is, performs spurious movement). The migration property scale is a numerical value scale that (1) gives a high numerical value only to the former cell (the observation target) as the one having a high migration property and (2) gives a low numerical value to the latter cell (the observation target) and a cell that does not migrate as the ones having a low migration property. By way of example, the migration property scale may include at least one or more of a distance between start and end points of the trajectory of the observation target, a linearity of the trajectory, a total moving distance of the trajectory, a reaching distance, or a moving speed.

Fig. 10 shows S240 in the flow. First, at S241, the migration property calculating unit 500 calculates the distance between start and end points of the observation target based on the trajectory of the living body as the observation target generated at S220. The start point of the trajectory of the observation target is the reference position of the observation target in the image at a starting time of time-lapse imaging. Here, the starting time of time-lapse imaging may include not only the starting time but also a time close to the starting time. The end point of the trajectory of the observation target may be the reference position in the image of the observation target at an end time of time-lapse imaging. Here, the end time of time-lapse imaging may include not only the end time but also a time close to the end time. The distance between start and end points may be a straight-line distance from the start point to the end point. After calculating the distance between start and end points of the observation target, the migration property calculating unit 500 allows the process to proceed to S242.

Then, at S242, the migration property calculating unit 500 calculates the total moving distance of the observation target based on the generated trajectory of the living body as the observation target. The total moving distance of the observation target may be a full length of the trajectory from the start point to the end point of the observation target. The definition of the start point and the end point of the trajectory of the observation target may be the same as the definition above. For example, in Fig. 9A, the total moving distance of the cell on the left side may be the full length of the trajectory 420a (that is, total lengths of line segments configuring the trajectory 420a). For example, in Fig. 9A, the total moving distance of the cell on the right side may be the full length of the trajectory 420b (that is, total lengths of line segments configuring the trajectory 420b). Note that, the step of S241 and the step of S242 may be performed in a reverse order or may be performed simultaneously. After calculating the total moving distance of the observation target, the migration property calculating unit 500 allows the process to proceed to S243.

Then, at S243, the migration property calculating unit 500 calculates a linearity of the living body as the observation target. Here, the linearity may be defined by the following equation.

[Equation 1]

$$\text{A linearity} = (\text{a distance between start and end points of an observation target}) / (\text{a total moving distance of the observation target})$$

In equation 1, the distance between start and end points of the observation target is a value calculated at S241. In equation 1, the total moving distance of the observation target is a value calculated at S242. According to the definition of equation 1, the value of the linearity is a real number being 0 or more and 1 or less. According to the definition of the linearity above, it is estimated that the cell that stays at the same location and only changes the form has a low linearity, and the cell that moves away from the start point has a high linearity. After calculating the linearity of the observation target, the migration property calculating unit 500 allows the process to proceed to S250.

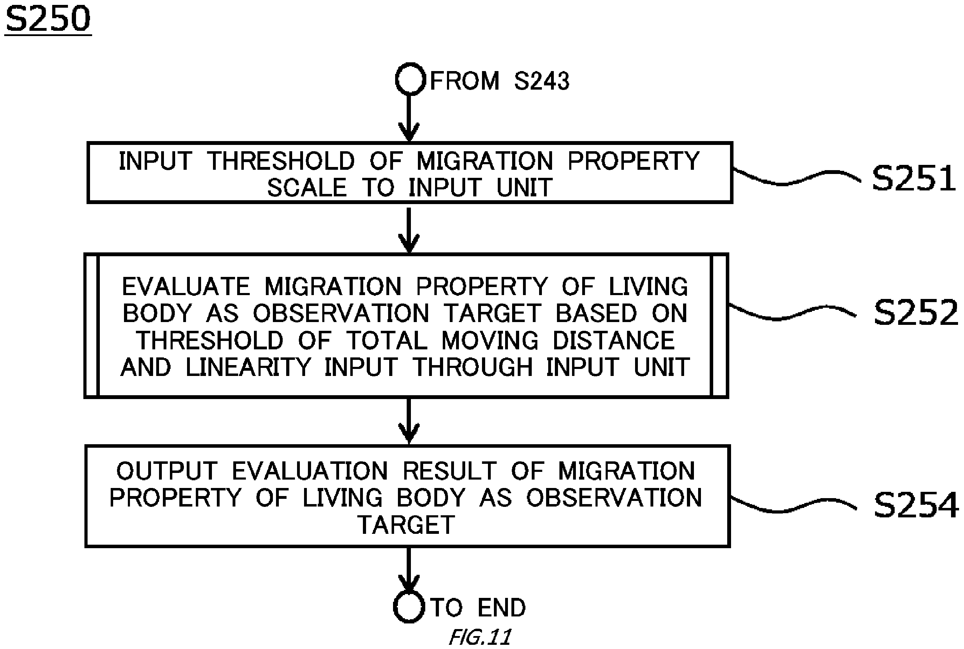

Then, at a step of S250, the migration property evaluating unit 600 evaluates the migration property of the living body as the observation target to select the one having a high migration property. At S250, the step of evaluating the migration property of the living body as the observation target to selecti the one having a high migration property includes steps of S251 to S254 as shown in Fig. 11.

Fig. 11 shows S250 in the flow. First, at S251, the migration property evaluating unit 600 receives an input related to a threshold of the migration property scale from the observer through the input unit 180. The migration property scale may be some of the distance between start and end points, the total moving distance, the linearity, the reaching distance and the moving speed. The reaching distance and the moving speed will be described below. The threshold is a value used in a way that an observation target is selected as having a high migration property when the migration property scale of the observation target is equal to or greater than this value.

A predetermined value may be used, or the threshold may be set arbitrarily by the observer. For example, a threshold determined by the observer as being appropriate based on a moving image or the like of moving trajectories of a plurality of observation targets or the like displayed on the output unit 160 may be set. In this case, the migration property calculating apparatus 170 may display a window screen or the like for allowing inputting the threshold on the output unit 160 and acquire a value input as the threshold by the observer through the input unit 180.

The threshold may be set automatically by the migration property calculating apparatus 170. For example, when the type of the cell as the observation target is input into the input unit 180, the migration property calculating apparatus 170 may set a pre-defined threshold based on the input type of the cell. In addition, the migration property calculating apparatus 170 may also calculate a statistical value (such as the average, the median, and the sum or difference between the average and the standard deviation σ) of the migration property scales calculated at S240 and use this as the threshold. For example, the migration property calculating apparatus 170 may calculate the average, the median, the average + σ, the average - σ, the average + 2 σ, the average - 2 σ or the like of the plurality of distances between start and end points of the observation target obtained at S241, and may set this as the threshold to be applied to the distance between start and end points later.

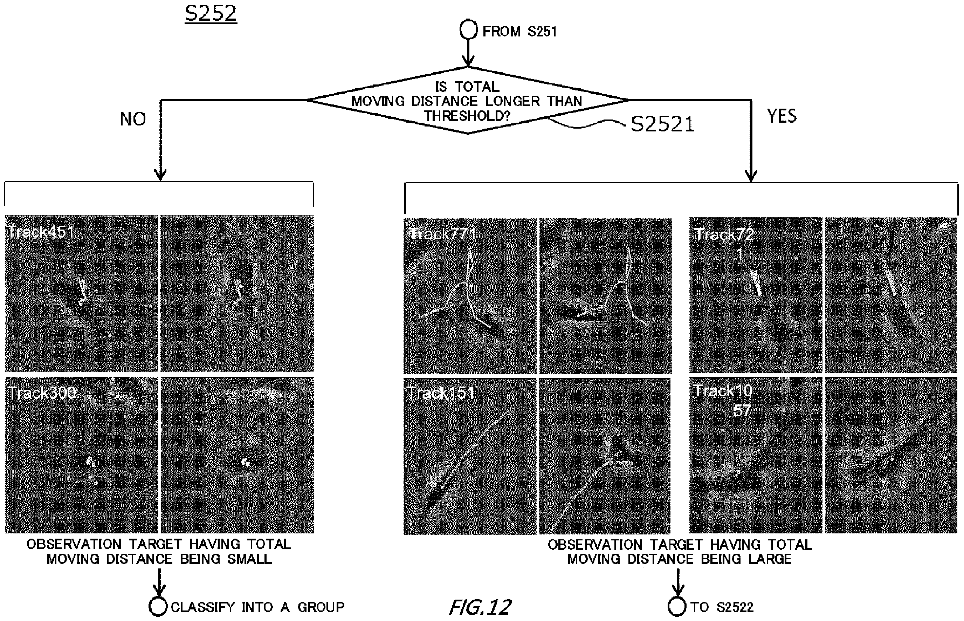

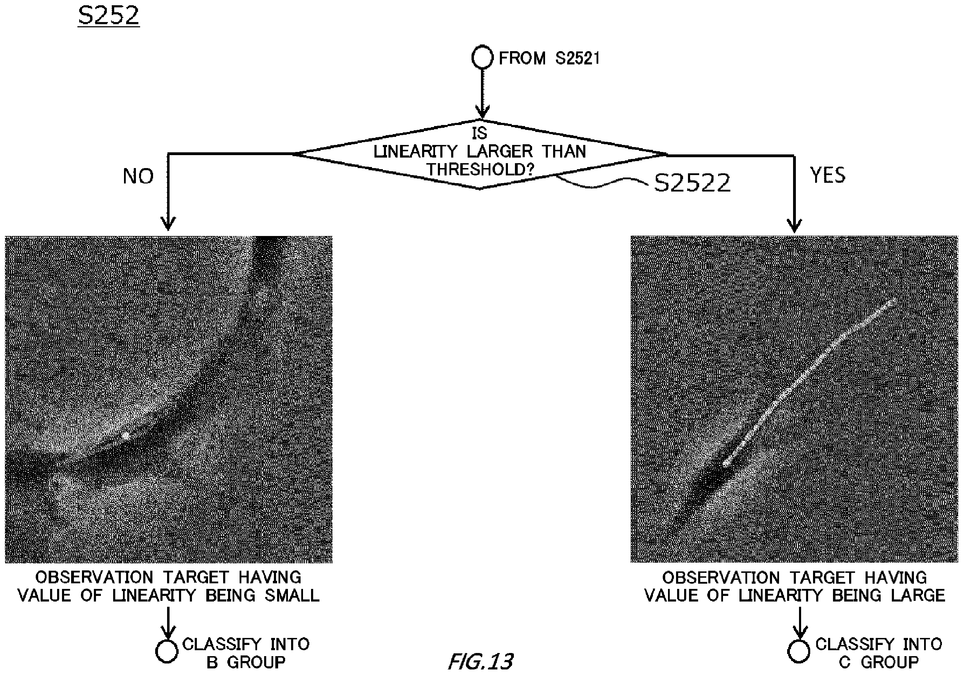

Then, at S252, the migration property evaluating unit 600 evaluates the migration property of the living body as the observation target based on the set thresholds of the total moving distance and the linearity. At S252, the step of evaluating the migration property of the living body as the observation target includes the steps of S2521 and S2522 as shown in Fig. 12 and Fig. 13.

First, at S2521 of Fig. 12, the migration property evaluating unit 600 evaluates whether the total moving distance of the observation target is longer than a threshold. If the total moving distance of the observation target is less than the threshold, the migration property evaluating unit 600 may evaluate said the observation target as having the total moving distance being small. If the total moving distance of the observation target is equal to or greater than the threshold, the migration property evaluating unit 600 may evaluate said the observation target as having a total moving distance being large. After evaluating the observation target as having a total moving distance being large, the migration property evaluating unit 600 allows the process to proceed to S2522.

Then, at S2522 of Fig. 13, the migration property evaluating unit 600 evaluates whether the value of the linearity of the observation target having been evaluated as having the total moving distance being large is greater than a threshold. If the value of the linearity of the observation target is less than the threshold, the migration property evaluating unit 600 evaluates said the observation target as having the linearity being small. If the value of the linearity of the observation target is equal to or greater than the threshold, the migration property evaluating unit 600 evaluates said the observation target as having a linearity being large. Note that, the step of S2521 and the step of S2522 may be performed in a reverse order.

Then, at S254, the migration property evaluating unit 600 outputs the evaluation result of the migration property of the living bodies as the observation targets. The migration property evaluating unit 600 may classify the living bodies as the observation targets by the evaluation result of the migration property. The migration property evaluating unit 600 may select, among the living bodies as the observation targets, the one having a high migration property. For example, the migration property evaluating unit 600 may select observation targets having the migration property scale of the observation target being greater than the first threshold as the most highest migration property group, select observation targets having the migration property scale of the observation target being less than or equal to the first threshold and being greater than the second threshold as a medium migration property group, and select observation targets having the migration property scale of the observation target being less than or equal to the second threshold as a low migration property group. By selecting observation targets in this manner, the migration property evaluating unit 600 may classify the observation targets based on the migration property.

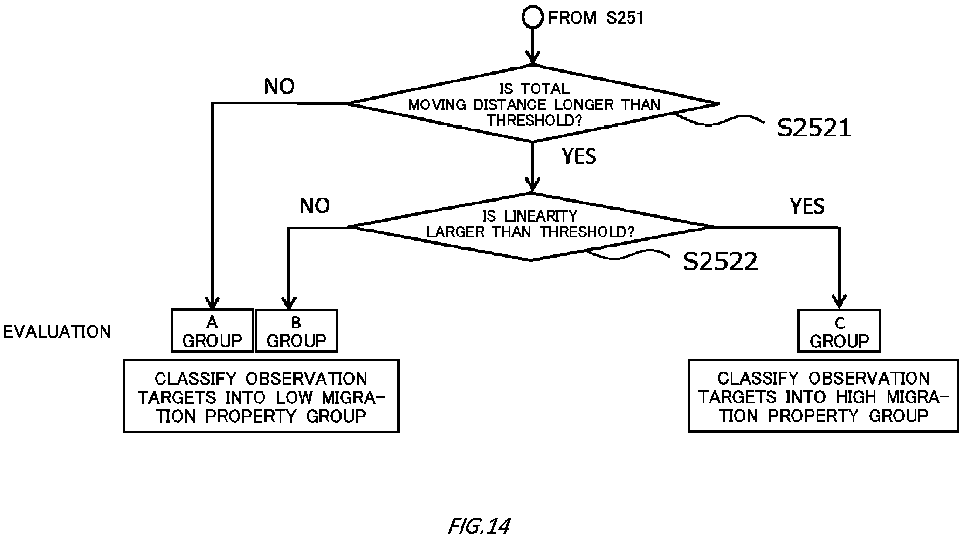

For example, in Fig. 14, the migration property evaluating unit 600 classifies the observation target having been evaluated as having the total moving distance being small at the step of S2521 into A group. For example, in Fig. 14, the migration property evaluating unit 600 classifies the observation target having been evaluated as having the total moving distance being large at the step of S2521 and evaluated as having the value of the linearity being small at the step of S2522 into B group. For example, in Fig. 14, the migration property evaluating unit 600 classifies the observation target having been evaluated as having the total moving distance being large at the step of S2521 and evaluated as having the value of the linearity being large at the step of S2522 into C group. The migration property evaluating unit 600 evaluates the plurality of observation targets classified into A group and B group as having a low migration property. The migration property evaluating unit 600 may evaluate the plurality of observation target classified into C group as having a high migration property. Alternatively, the migration property evaluating unit 600 may evaluate A group as having a low migration property, evaluate B group as having a medium migration property, and evaluate C group as having a high migration property.

For example, the migration property calculating unit 500 may calculate a proportion of the observation targets belonging to A group to the whole observation targets (also referred to as "A group proportion"). For example, the migration property calculating unit 500 may calculate a proportion of the observation targets belonging to B group to the whole observation targets (also referred to as "B group proportion"). For example, the migration property calculating unit 500 may calculate a proportion of the observation targets belonging to C group to the whole observation targets (also referred to as "C group proportion"). The migration property evaluating unit 600 may evaluate the migration property of the observation target based on the proportion of each group above. For example, the migration property evaluating unit 600 may evaluate a group of the observation target having the A group proportion (or the sum of the A group proportion and the B group proportion) is equal to or greater than a threshold as having a good migration property. The evaluation of the migration property may be output to the output unit 160 and/or recorded in the recording unit 190.

In the classification above, an observation target (for example, the cell on the left side of Fig. 9A) having the total distance movement being large and the value of the linearity being large is classified into a high migration property group, and by performing classification in this manner, a cell that remains at the same location and changes only its form is evaluated as having a low migration property. In addition, a cell having a large total moving distance but merely moving its barycenter within a rage close to the start point (for example, the cell on the right side of Fig. 9A) has a low value of the linearity and thus it is evaluated as having a low migration property. Therefore, according to the classification above, a cell group having moved away from the start point can be evaluated as having a high migration property.

Although a plurality of observation target are classified into A group, B group, and C group in the example above, the migration property may also be evaluated when the observation target is one. In addition, although one threshold is set for each of the total moving distance and the linearity in the example above, two or more thresholds may be set for each migration property scale. By setting two or more thresholds for each migration property scale, the migration property can be evaluated in more detail.

Note that, although the migration property of the observation target is evaluated by using the total moving distance and the linearity as migration property scales in Fig. 14, the evaluating method of the migration property is not limited thereto. For example, the migration property evaluating unit 600 may evaluate whether the distance between start and end points of the observation target is longer than a threshold. If the distance between start and end points of the observation target is less than the threshold, the migration property evaluating unit 600 may evaluate said observation target as having the distance between start and end points being small. For an observation target having been evaluated as having the distance between start and end points being small, the migration property evaluating unit 600 may evaluate said observation target as having a low migration property. If the distance between start and end points of the observation target is equal to or greater than the threshold, the migration property evaluating unit 600 may evaluate said observation target as having the distance between start and end points being large. For an observation target having been evaluated as having the distance between start and end points being large, the migration property evaluating unit 600 may evaluate said observation target as an observation target having a high migration property.

When the distance between start and end points of the observation target is used, the migration property evaluating unit 600 can evaluate the migration property of the observation target in one stage. On the other hand, when the total moving distance and the linearity are used as at S2521 and S2522 of Fig. 14, the migration property of the observation target can be classified more finely (for example, A group and B group can be isolated).

Then, a modified example of the present embodiment is shown. A plurality of modified examples described below may be combined and used for evaluating the migration property of the observation target.

[First Modified Example]

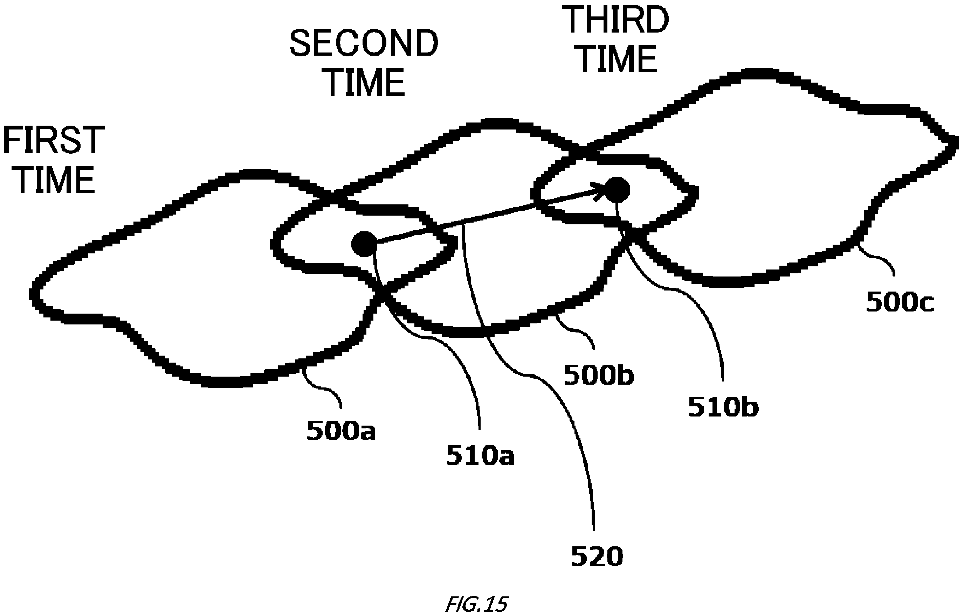

Fig. 15 is a modified example of the definition of the reference position of the observation target. The trajectory generating unit 400 may set the reference position based on a region where the observation targets at different positions at adjacent times in a plurality of observation images overlap. For example, the trajectory generating unit 400 may set the barycenter, the center, or the end of the region where the observation targets overlap as the reference position. For example, in Fig. 15, a barycenter 510a of a region where a cell 500a at the first time and a cell 500b at the second time adjacent (for example, subsequent) to the first time overlap may be set as the reference position. In addition, in Fig. 15, a barycenter 510b of a region where the cell 500b at the second time and a cell 500c at the third time adjacent (for example, subsequent) to the second time overlap may be set as the reference position. In this case, a line segment 520 connecting the barycenter 510a and the barycenter 510b may be used as a moving trajectory of the observation target. In this manner, for a cell that does not significantly change its form during movement, the barycenter of a region the observation targets overlap can be set as the reference position, and the migration property may be evaluated. In addition, for a cell that repeats contraction at the almost same position, the region where the observation targets overlap does not significantly change, and thus setting the barycenter of the region where the observation targets overlap as the reference position and evaluating a migration property is suitable.

[Second Modified Example]

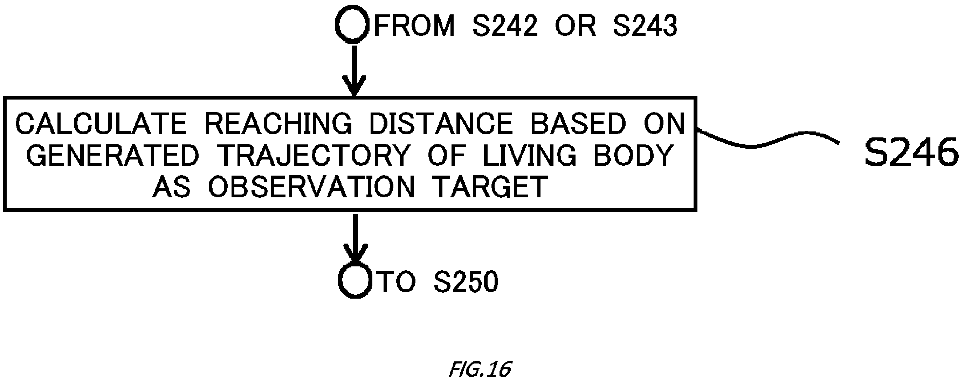

Fig. 16 is a modified example of a flow of calculating the migration property scale of the observation target of S240. After calculating the total moving distance of the living body as the observation target at S242, or after calculating the linearity of the living body as the observation target at S243, the migration property calculating unit 500 may additionally perform the step of S246. At S246, the migration property calculating unit 500 may calculate a reaching distance based on the generated trajectory of the living body as the observation target. Here, the reaching distance is a distance between a start point on the moving trajectory of the observation target and the farthest point which is a position farthest from the start point. For example, the migration property calculating unit 500 may calculate respective distances between the start point on the moving trajectory of the observation target and each of the reference positions configuring the moving trajectory of the observation target, and set the largest distance among them as the reaching distance.

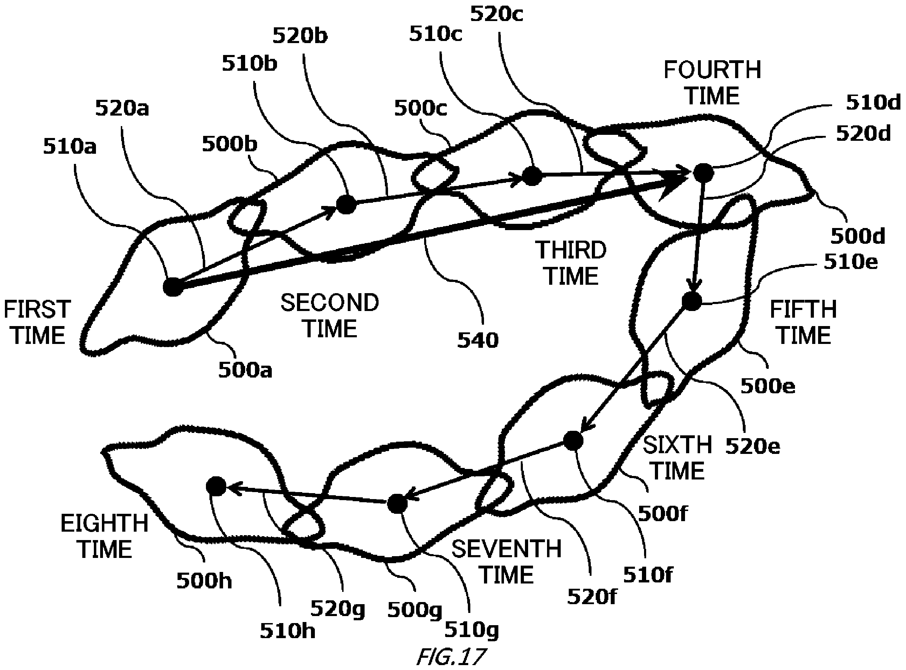

Fig. 17 illustrates the reaching distance. The time-lapse imaging is performed on observation targets at the first time to the eighth time, and the positions for observation targets at each time are 500a to 500h. In addition, the reference positions of the observation targets at each time are 510a to 510h. Then, moving trajectory of the observation target is represented by sequentially connected line segments 520a to 520, and the start point on the trajectory is 510a and the end point on the trajectory is 510h. In Fig. 17, the farthest point being farthest from 510a, which is the start point of the trajectory, is the reference position of the observation target at the fourth time 510d, and thus the reaching distance in this case is represented by the distance 540 between a point 510a and a point 510d.

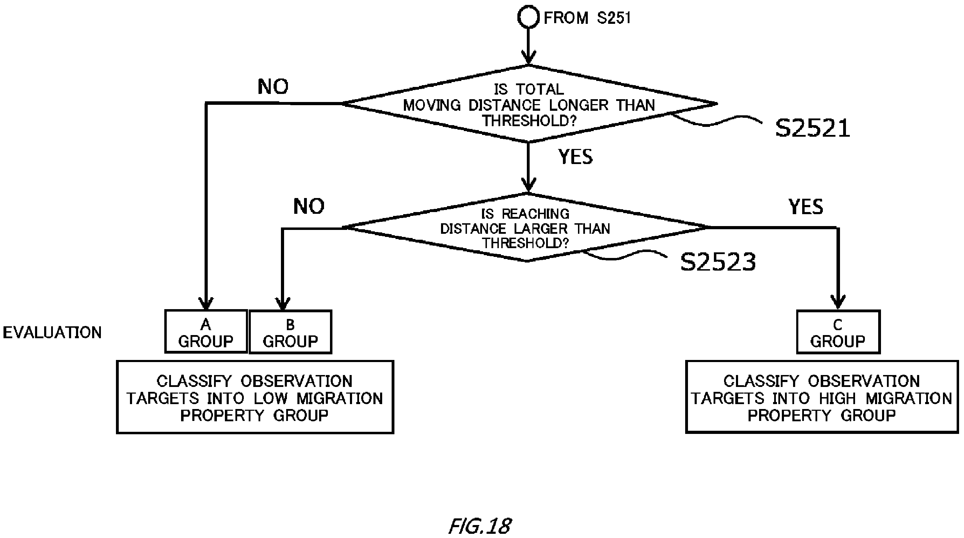

Fig. 18 is a flow when the total moving distance and the reaching distance are used as migration property scales. The step of S2521 may be explained by directly applying the already described explanation. After evaluating that the total moving distance of the observation target is longer than the threshold at the step of S2521, the migration property evaluating unit 600 allows the process to proceed to S2523. At S2523, the migration property evaluating unit 600 evaluates whether the reaching distance of the observation target having been evaluated as having the total moving distance being large is greater than a threshold. Here, at S251, the threshold of the reaching distance may be set arbitrarily by the observer or may be set automatically by the migration property calculating apparatus 170.

If the reaching distance of the observation target is less than the threshold, the migration property evaluating unit 600 may evaluate the reaching distance of said observation target as being small. If the reaching distance of the observation target is equal to or greater than the threshold, the migration property evaluating unit 600 may evaluate the reaching distance of said observation target as being large.

For example, in Fig. 18, the migration property evaluating unit 600 may classify the observation target having been evaluated as having the total moving distance being small at the step of S2521 into A group. For example, in Fig. 18, the migration property evaluating unit 600 may classify the observation target having been evaluated as having the total moving distance being large at the step of S2521 and evaluated as having the reaching distance being small at the step of S2523 into B group. For example, in Fig. 18, the migration property evaluating unit 600 may classify the observation target having been evaluated as having the total moving distance being large at the step of S2521 and evaluated as having the reaching distance being large at the step of S2523 into C group. The migration property evaluating unit 600 may evaluate the plurality of observation targets classified into A group and B group as having a low migration property. The migration property evaluating unit 600 may evaluate the plurality of observation targets classified into C group as having a high migration property. That is, the migration property evaluating unit 600 may not select the observation target having the reaching distance being less than or equal to the threshold as the one having a high migration property.

For example, for the cell shown in Fig. 17, although the total moving distance of the cell is large, the starting point and the end point of the movement are close, and the distance between start and end points (the distance between the point 510a and the point 510h) are small, and thus if this cell experiences the step of S2522, the migration property evaluating unit 600 is likely to evaluate this cell as having a low migration property. However, according to the method of the second modified example above, by S2523, the migration property evaluating unit 600 evaluates the one having a large reaching distance as having a high migration property and evaluates the one having a small reaching distance as having a low migration property, and thus this cell will be evaluated as having a high migration property. In other words, the migration property of the observation target is evaluated more appropriately. Note that, although the total moving distance and the reaching distance are used as migration property scales to evaluate the migration property of the observation target in the second modified example above, the migration property evaluating unit 600 may use the linearity and the reaching distance as the migration property scale to evaluate the migration property of the observation target.

[Third Modified Example]

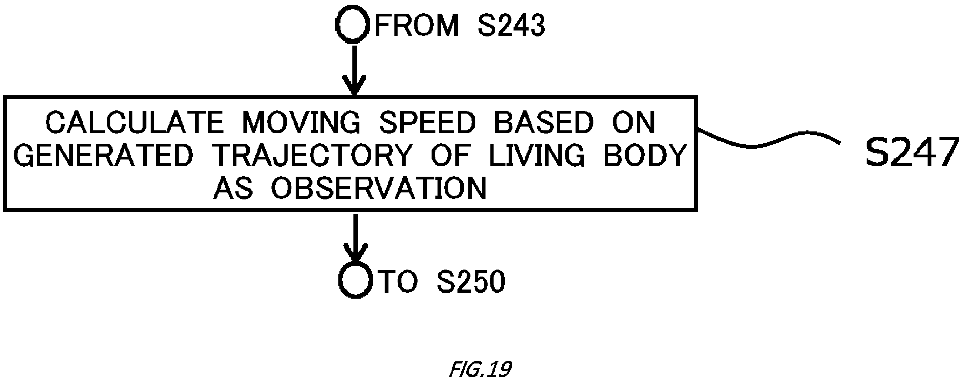

Fig. 19 is another modified example of a flow of calculating the migration property scale of the observation target of S240. After calculating the linearity of the living body as the observation target at S243, the migration property calculating unit 500 may additionally perform the step of S247. At S247, the migration property calculating unit 500 may calculate the moving speed of the observation target based on the generated trajectory of the living body as the observation target. Here, the moving speed may be defined as what obtained by dividing a distance between a position of a cell at the first time and a position of the cell at the second time by a time from the first time to the second time.

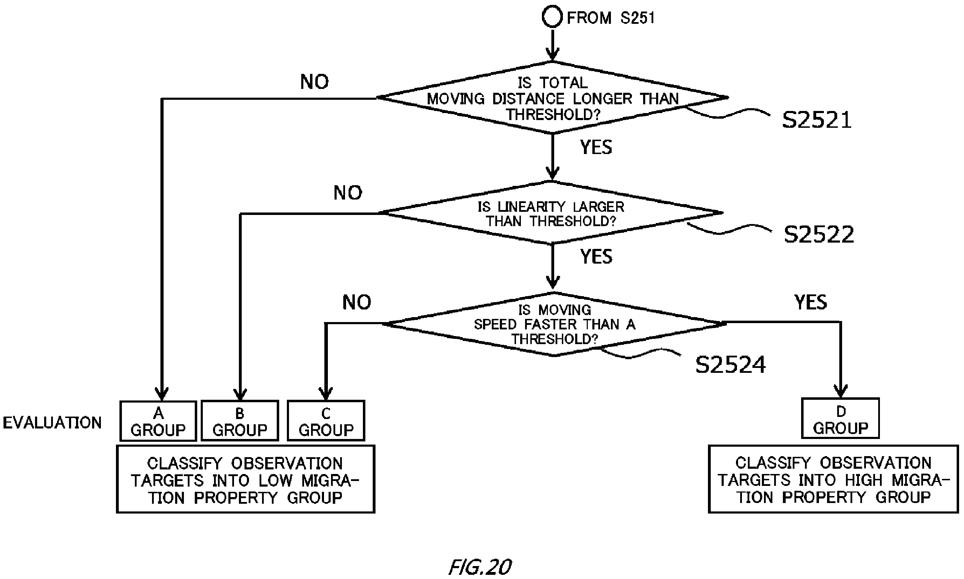

Fig. 20 is a flow when the moving speed is further used as the migration property scale in addition to the total moving distance and the linearity. The steps of S2521 and S2522 may be explained by directly applying the already described explanation. After evaluating that the linearity of the observation target is longer than the threshold at the step of S2522, the migration property evaluating unit 600 allows the process to proceed to S2524. At S2524, the migration property evaluating unit 600 evaluates whether the moving speed of the observation target having been evaluated as having the linearity being large is greater than a threshold. Here, at S251, the threshold of the moving speed may be set arbitrarily by the observer or may be set automatically by the migration property calculating apparatus 170. For a cell moving fast, the threshold may be set relatively high. For a cell moving slowly, the threshold may be set relatively low.

When the moving speed of the observation target is less than the threshold, the migration property evaluating unit 600 may evaluate said observation target as having the moving speed being small. When the moving speed of the observation target is equal to or greater than the threshold, the migration property evaluating unit 600 may evaluate said observation target as having the moving speed being large.

For example, in Fig. 20, at the step of S2521, the migration property evaluating unit 600 may classify the observation target having been evaluated as having the total moving distance being small into A group. For example, in Fig. 18, the migration property evaluating unit 600 may classify the observation target having been evaluated as having the total moving distance being large at the step of S2521 and evaluated as having the value of the linearity being small at the step of S2522 into B group. For example, in Fig. 18, the migration property evaluating unit 600 may classify the observation target having been evaluated as having the total moving distance being large at the step of S2521, evaluated as having the value of the linearity being large at the step of S2522, and evaluated as having the moving speed being small at the step of S2524 into C group. For example, in Fig. 18, the migration property evaluating unit 600 may classify the observation target having been evaluated as having the total moving distance being large at the step of S2521, evaluated as having the value of the linearity being large at the step of S2522, and evaluated as having the moving speed being large at the step of S2524 into D group. The migration property evaluating unit 600 may evaluate the plurality of observation targets classified into A group, B group and C group as having a low migration property. The migration property evaluating unit 600 may evaluate the plurality of observation targets classified into D group as having a high migration property. In other words, the migration property evaluating unit 600 can select the observation target having the moving speed being equal to or greater than a threshold among the plurality of observation targets as having a high migration property.

In addition, the migration property evaluating unit 600 may classify the migration property of A to C groups further finely. For example, the migration property evaluating unit 600 may evaluate A group and B group as having a low migration property and C group as having a medium migration property.

According to the method of the third modified example above, other than the distance, the speed, which is a time element, as a migration property scale, can also be evaluated, and thus the migration property of the observation target is evaluated in more detail.

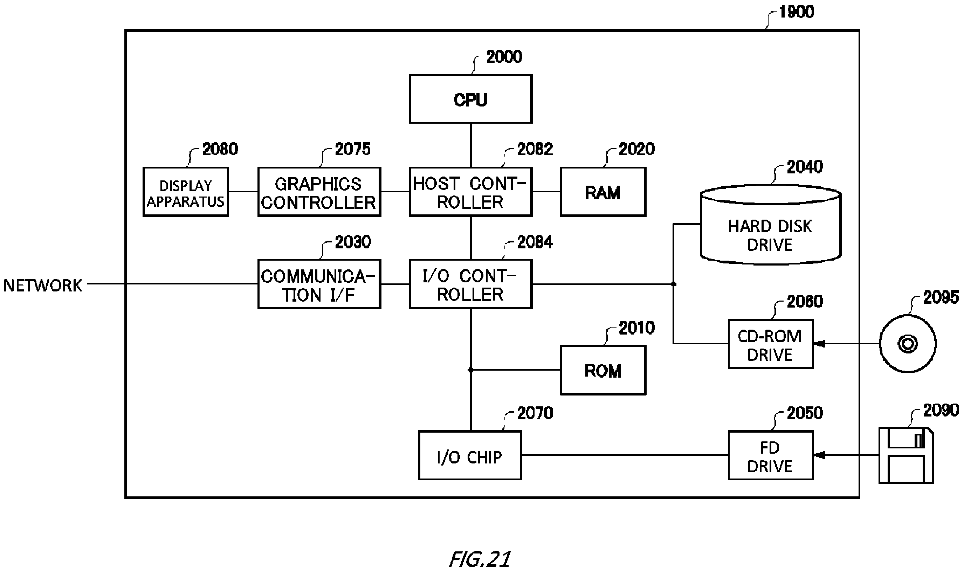

Fig. 21 shows an example of a hardware configuration of a computer 1900, which functions as the migration property calculating apparatus 170. The computer 1900 according to the present embodiment includes: a CPU-peripheral portion having a CPU 2000, a RAM 2020, a graphics controller 2075, and a display apparatus 2080 interconnected by a host controller 2082; and an input/output unit having communication interface 2030, a hard disk drive 2040, and a CD-ROM drive 2060 connected to the host controller 2082 by an input/output controller 2084; and a legacy input/output unit having a ROM 2010, a flexible disk drive 2050, and an input/output chip 2070 connected to the input/output controller 2084.

The host controller 2082 connects the RAM 2020 with the CPU 2000 and the graphics controller 2075 accessing the RAM 2020 at a high transfer rate. The CPU 2000 is configured to operate based on programs stored in the ROM 2010 and the RAM 2020 and control each unit. The graphics controller 2075 is configured to acquire image data generated by the CPU 2000 or the like on a frame buffer provided inside the RAM 2020 and display the image data on the display apparatus 2080. Alternatively, the graphics controller 2075 may include therein a frame buffer storing the image data generated by the CPU 2000 or the like. On the display apparatus 2080, various information generated inside the migration property calculating apparatus 170 (for example, a moving image, an evaluation result of the migration property and the like) can be displayed.

The input/output controller 2084 connects the communication interface 2030, the hard disk drive 2040, and the CD-ROM drive 2060 which are relatively fast input/output apparatuses to the host controller 2082. The communication interface 2030 is configured to communicate with other apparatuses via a network by wire or wirelessly. In addition, the communication interface is configured to function as a hardware to perform communications. The hard disk drive 2040 stores a program and data to be used by the CPU 2000 in the computer 1900. The CD-ROM drive 2060 is configured to read a program or data from the CD-ROM 2095 and provide the hard disk drive 2040 through the RAM 2020.

In addition, the ROM 2010, and the flexible disk drive 2050 and input/output chip 2070, which are relatively low-speed input/output apparatuses, are connected to the input/output controller 2084. The ROM 2010 stores a boot program performed when the computer 1900 starts up, and/or a program relying on the hardware of the computer 1900, and the like. The flexible disk drive 2050 is configured to read out a program or data from the flexible disk 2090, and provide it to the hard disk drive 2040 via the RAM 2020. The input/output chip 2070 connects the flexible disk drive 2050 to the input/output controller 2084, and connects various types of input/output apparatuses to the input/output controller 2084, for example, via a parallel port, a serial port, a keyboard port, a mouse port, or the like.

The program provided to the hard disk drive 2040 via the RAM 2020 is stored in a recording medium, such as the flexible disk 2090, the CD-ROM 2095, or an IC card, and provided by a user. The program is read out from the recording medium, installed on the hard disk drive 2040 in the computer 1900 via the RAM 2020, and executed in the CPU 2000.

A program installed to the computer 1900 and causing the computer 1900 to function as the migration property calculating apparatus 170 includes a trajectory generating module, a migration property calculating module, a migration property evaluating module, and an imaging apparatus controlling module. These programs or modules may work on the CPU 2000 or the like to cause the computer 1900 to function as each of the trajectory generating unit 400, the migration property calculating unit 500, the migration property evaluating unit 600, and the imaging apparatus controlling unit 171.

Being read by the computer 1900, information processing written in these programs function as the trajectory generating unit 400, the migration property calculating unit 500, the migration property evaluating unit 600, and the imaging apparatus controlling unit 171, which are specific means realized by cooperation between software and various types of hardware resources described above. With these specific means, the migration property calculating apparatus 170 specific to the intended use can be configured by realizing the computation or processing on information according to the intended use of the computer 1900 according to the present embodiment.

By way of example, when communication is performed between the computer 1900 and an external apparatus or the like, the CPU 2000 is configured to execute the communication program loaded on the RAM 2020, and provide the communication interface 2030 with communication processing instructions based on the content of the process written in the communication program. In response to the control by the CPU 2000, the communication interface 2030 is configured to read out the transmission data stored in the transmission buffer region or the like provided on the storage apparatus, such as the RAM 2020, the hard disk drive 2040, the flexible disk 2090, the CD-ROM 2095, or the like, and transmit this transmission data to the network, and write reception data received from the network onto a reception buffer region or the like provided on the storage apparatus. In this manner, the communication interface 2030 may transfer transmission/reception data to the storage apparatus through DMA (Direct Memory Access) scheme, and alternatively, the CPU 2000 may transfer the transmission/reception data by reading the data from the storage apparatus or communication interface 2030 that are a transfer source, and writing the data onto the communication interface 2030 or the storage apparatus of a transfer destination.

In addition, the CPU 2000 causes all or necessary portions of files or database stored in an external storage apparatus such as the hard disk drive 2040, the CD-ROM drive 2060 (CD-ROM 2095), and the flexible disk drive 2050 (flexible disk 2090) to be read into the RAM 2020 by means of DMA transfer or the like, and then performs various types of processing on the data in the RAM 2020. The CPU 2000 writes back the data on which processing is completed into an external storage apparatus by DMA transfer or the like. In such processing, the RAM 2020 can be regarded as carrying contents of the external storage apparatus temporarily, and thus the RAM 2020, the external storage apparatus and the like are collectively called a memory, a recording unit, a storage apparatus or the like in the present embodiment.

Here, the storage apparatus or the like is configured to store information required for the information processing of the migration property calculating apparatus 170, for example, moving image data and the like, as needed and feed it to each component of the migration property calculating apparatus 170 as needed.

Various types of information such as various types of programs, data, tables, databases or the like in the present embodiment according to the present embodiment are stored on such a storage apparatus, and are subjected to information processing. Note that, the CPU 2000 can carry a part of the RAM 2020 in a cache memory and read from or write to the cache memory. In such a configuration as well, the cache memory serves a part of the function of the RAM 2020, and therefore the cache memory is also included with the RAM 2020, the memory, and/or the storage apparatus in the present embodiment, except when it is shown with distinction.

In addition, the CPU 2000 is configured to execute various types of processing including various types of computations, information processing, conditional determination, information search/replacement, or the like described in the present embodiment for the data read from the RAM 2020, as specified by the instruction sequence of the program, and writes the result back onto the RAM 2020. For example, when performing conditional determination, the CPU 2000 compares various types of variables shown in the present embodiment to determine whether they satisfy conditions such as being larger than, smaller than, equal to or greater than, less than or equal to, equal to or like other variables or constants, and if a condition is satisfied (or if it is not satisfied) branches to a different instruction sequence or calls up a subroutine.

In addition, the CPU 2000 can search for information stored in a file in the storage apparatus or the database, or the like. For example, if a plurality of entries, each having an attribute value of a second attribute associated with an attribute value of a first attribute, are stored in a storage apparatus, the CPU 2000 searches, from among the plurality of entries stored in the storage apparatus, an entry having an attribute value of the first attribute that matches a specified condition, and reads out the attribute value of the second attribute stored in the entry, and it is thereby possible to obtain the attribute value of the second attribute associated with the first attribute that satisfies a predetermined condition.

The programs or modules shown above may also be stored in an external recording medium. As a recording medium, other than the flexible disk 2090 and the CD-ROM 2095, an optical recording medium such as DVD or CD, a magneto-optical recording medium such as MO, a tape medium, a semiconductor memory, such as IC card, or the like can be used. In addition, a storage apparatus such as a hard disk or RAM that is provided with a server system connected to the Internet or a specialized communication network may be used as the recording medium to provide the programs to the computer 1900 via the network.

Although a configuration of the migration property calculating apparatus 170 having the CPU 2000 as a processor is shown in the present disclosure, the type of the processor is not particularly limited. For example, as a processor, GPU, ASIA, FPGA or the like can be used appropriately. In addition, although a configuration of the migration property calculating apparatus 170 having the hard disk drive 2040 as an auxiliary storage apparatus in the present disclosure, the type of the auxiliary storage apparatus is not particularly limited. For example, instead of the hard disk drive 2040 or in addition to the hard disk drive 2040, another storage apparatus such as a solid state drive may be used.

While the present invention has been described with the embodiments, the technical scope of the present invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the operation flow is described by using phrases such as "first" or "next" in the scope of the claims, specification, or drawings, it does not necessarily mean that the process must be performed in this order.

EXPLANATION OF REFERENCE NUMBERS

**[0134]** 1: migration property evaluating apparatus, 7: optical fiber, 10: imaging apparatus, 20: culture dish, 23: stage, 27: objective lens portion, 34: fluorescent filter portion, 38: imaging lens portion, 40: transmitted illumination unit, 41: collector lens, 44: field lens, 45: polarized mirror, 47: light source for transmitted illumination, 50: timeline, 52: pause button, 53: skipping button, 54: playback button, 55: fast-forward button, 56: clipping button, 60: slider bar, 70: light source for excitation, 100: chamber, 101: display region, 102: display region, 103: display region, 104: display region, 105: playback controlling portion, 150: microscope portion, 160: output unit, 170: migration property calculating apparatus, 171: imaging apparatus controlling unit, 180: input unit, 190: recording unit, 300: camera, 400: trajectory generating unit, 411: field lens, 452: polarized mirror, 500: migration property calculating unit, 600: migration property evaluating unit, 1900: computer, 2000: CPU, 2010: ROM, 2020: RAM, 2030: communication interface, 2040 hard disk drive, 2050: flexible disk drive, 2060: CD-ROM drive, 2070: input/output chip, 2075: graphics controller, 2080: display apparatus, 2082: host controller, 2084: input/output controller, 2090: flexible disk, 2095: CD-ROM.

**Claims**

1. A migration property evaluating method, comprising:

   generating a moving trajectory of a living body as an observation target based on a plurality of images of the observation target obtained by capturing observation images of the observation target a plurality of times in chronological order;
   calculating a migration property by calculating a migration property scale representing a degree to which the observation target become distant from a start point on the trajectory on the moving trajectory of the observation target; and
   evaluating a migration property by evaluating whether the observation target satisfies a pre-defined condition based on the migration property scale of the observation target.

2. The migration property evaluating method according to Claim 1, wherein

   the calculating a migration property comprises calculating, based on the moving trajectory of the observation target, a distance between start and end points as at least part of the migration property scale, wherein the distance between start and end points is a straight-line distance from the start point to an end point of the trajectory of the observation target, and
   the evaluating a migration property comprises selecting, among a plurality of observation targets, each of which being the observation target, an observation target having the distance between start and end points being equal to or greater than a threshold as an observation target having a high migration property.

3. The migration property evaluating method according to Claim 2, wherein

the calculating a migration property comprises calculating, based on the moving trajectory of the observation target, a total moving distance of the observation target and a linearity of the moving trajectory by dividing the distance between start and end points of the observation target by the total moving distance, as at least part of the migration property scale, and

the evaluating a migration property comprises selecting, among a plurality of observation targets, each of which being the observation target, an observation target having the total moving distance being equal to or greater than a threshold and the linearity being equal to or greater than a threshold as an observation target having a high migration property.

4. The migration property evaluating method according to Claim 1, wherein

the calculating a migration property comprises calculating, based on the moving trajectory of the observation target, a total moving distance of the observation target and a reaching distance from the start point to a farthest point farthest from the start point on the moving trajectory of the observation target, as at least part of the migration property scale, and

the evaluating a migration property comprises selecting, among a plurality of observation targets, each of which being the observation target, an observation target having the total moving distance being equal to or greater than a threshold and the reaching distance being equal to or greater than a threshold as an observation target having a high migration property.

5. The migration property evaluating method according to Claim 3, wherein

the calculating a migration property comprises calculating a moving speed of the observation target as at least part of the migration property scale, and

the evaluating a migration property comprises selecting, among a plurality of observation targets, each of which being the observation target, an observation target having the moving speed being equal to or greater than a threshold as an observation target having a high migration property.

6. A computer program having therein an instruction, wherein
when executed by a processor or a programmable circuit, the instruction causes the processor or the programmable circuit to perform operations comprising:

acquiring a plurality of images of a living body as an observation target obtained by capturing observation images of the observation target a plurality of times in chronological order;

generating a moving trajectory of the observation target based on the plurality of images of the observation target;

calculating a migration property by calculating a migration property scale representing a degree to which the observation target become distant from a start point on the trajectory on the moving trajectory of the observation target; and

evaluating a migration property by evaluating whether the observation target satisfies a pre-defined condition based on the migration property scale of the observation target.

7. The computer program according to Claim 6, wherein

the calculating a migration property comprises calculating, based on the moving trajectory of the observation target, a distance between start and end points as at least part of the migration property scale, wherein the distance between start and end points is a straight-line distance from the start point to an end point of the trajectory of the observation target, and

the evaluating a migration property comprises selecting, among a plurality of observation targets, each of which being the observation target, an observation target having the distance between start and end points being equal to or greater than a threshold as an observation target having a high migration property.

8. The computer program according to Claim 7, wherein

the calculating a migration property comprises calculating, based on the moving trajectory of the observation target, a total moving distance of the observation target and a linearity of the moving trajectory by dividing the distance between start and end points of the observation target by the total moving distance, as at least part of the migration property scale, and

the evaluating a migration property comprises selecting, among a plurality of observation targets, each of which being the observation target, an observation target having the total moving distance being equal to or greater than a threshold and the linearity being equal to or greater than a threshold as an observation target having a high migration property.

9. The computer program according to Claim 6, wherein

the calculating a migration property comprises calculating, based on the moving trajectory of the observation target, a total moving distance of the observation target and a reaching distance from the start point to a farthest point farthest from the start point on the moving trajectory of the observation target, as at least part of the migration property scale, and

the evaluating a migration property comprises selecting, among a plurality of observation targets, each of which being the observation target, an observation target having the total moving distance being equal to or greater than a threshold and the reaching distance being equal to or greater than a threshold as an observation target having a high migration property.

10. The computer program according to Claim 8, wherein

the calculating a migration property comprises calculating a moving speed of the observation target as at least part of the migration property scale, and

the evaluating a migration property comprises selecting, among a plurality of observation targets, each of which being the observation target, an observation target having the moving speed being equal to or greater than a threshold as an observation target having a high migration property.

11. A migration property calculating apparatus, comprising:

a trajectory generating unit configured to generate a moving trajectory of a living body as an observation target based on a plurality of images of the observation target obtained by capturing observation images of the observation target a plurality of times in chronological order; and

a migration property calculating unit configured to calculate a migration property scale representing a degree to which the observation target become distant from a start point on the trajectory on the moving trajectory of the observation target.

12. The migration property calculating apparatus according to Claim 11, the migration property calculating apparatus comprising:

a migration property evaluating unit configured to evaluating whether the observation target satisfies a pre-defined condition based on the migration property scale of the observation target.

13. The migration property calculating apparatus according to Claim 12, wherein

the migration property calculating unit is configured to calculate, based on the moving trajectory of the observation target, a distance between start and end points as at least part of the migration property scale, wherein the distance between start and end points is a straight-line distance from the start point to an end point of the trajectory of the observation target, and

the migration property evaluating unit is configured to select, among a plurality of observation targets, each of which being the observation target, an observation target having the distance between start and end points being equal to or greater than a threshold as an observation target having a high migration property.

14. The migration property calculating apparatus according to Claim 13, wherein

the migration property calculating unit is configured to calculate, based on the moving trajectory of the observation target, a total moving distance of the observation target and a linearity of the moving trajectory by dividing the distance between start and end points of the observation target by the total moving distance, as at least part of the migration property scale, and

the migration property evaluating unit is configured to select, among a plurality of observation targets, each of which being the observation target, an observation target having the total moving distance being equal to or greater than a threshold and the linearity being equal to or greater than a threshold as an observation target having a high migration property.

15. The migration property calculating apparatus according to Claim 12, wherein

the migration property calculating unit is configured to calculate, based on the moving trajectory of the observation target, a total moving distance of the observation target and a reaching distance from the start point to a farthest point farthest from the start point on the moving trajectory of the observation target, as at least part of the migration property scale, and
the migration property evaluating unit is configured to select, among a plurality of observation targets, each of which being the observation target, an observation target having the total moving distance being equal to or greater than a threshold and the reaching distance being equal to or greater than a threshold as an observation target having a high migration property.

16. The migration property calculating apparatus according to Claim 14, wherein

the migration property calculating unit is configured to calculate a moving speed of the observation target as at least part of the migration property scale, and
the migration property evaluating unit is configured to select, among a plurality of observation targets, each of which being the observation target, an observation target having the moving speed being equal to or greater than a threshold as an observation target having a high migration property.

*FIG.1*

FIG.2

START

GENERATE IMAGES BY CAPTURING
IMAGES OF LIVING BODY AS
OBSERVATION TARGET ⟶ S210

GENERATE MOVING TRAJECTORY OF
LIVING BODY AS OBSERVATION TAR-
GET BASED ON GENERATED IMAGES ⟶ S220

SELECT OBSERVATION TARGET TO BE
EVALUATED ⟶ S230

DISPLAY OBSERVATION TARGET NOT TO BE
EVALUATED ⟶ S231

CONFIRM OBSERVATION TARGET NOT TO BE
EVALUATED ⟶ S232

CALCULATE MIGRATION PROPERTY
SCALE OF LIVING BODY AS OBSERVA-
TION TARGET TO BE EVALUATED ⟶ S240

EVALUATE MIGRATION PROPERTY OF LIVING
BODY AS OBSERVATION TARGET TO SELECT
ONE HAVING HIGH MIGRATION PROPERTY ⟶ S250

END

*FIG.3*

S210

◯ FROM START

┌─────────────────────────────────────┐
│ ACQUIRE DATA OF BIRD-VIEW IMAGE OF   │
│ LIVING BODY AS OBSERVATION TARGET TO │ ～～ S211
│ OUTPUT IT TO OUTPUT UNIT             │
└─────────────────────────────────────┘

NO ◇ IS CONDITION OF TIME-LAPSE IMAGING INPUT? ～～ S212

YES

┌─────────────────────────────────────┐
│ GENERATE RECIPE OF TIME-LAPSE        │
│ IMAGING BASED ON INPUT CONDITION     │ ～～ S213
└─────────────────────────────────────┘

NO ◇ IS STARTING TIME-LAPSE IMAGING INSTRUCTED? ～～ S214

YES

┌─────────────────────────────────────┐
│ START TIME-LAPSE IMAGING             │ ～～ S215
└─────────────────────────────────────┘

NO ◇ END TIME-LAPSE IMAGING? ～～ S216

YES

┌─────────────────────────────────────┐
│ GENERATE MOVING IMAGE FILE FROM      │
│ IMAGES OBTAINED BY TIME-LAPSE IMAGING│ ～～ S217
└─────────────────────────────────────┘

◯ TO S220

*FIG.4*

*FIG.5*

EP 4 177 350 A1

## S220

FROM S210

| PERFORM MASKING REGION SURROUNDED BY OUTER CIRCUMFERENCE OF A LIVING BODY AS THE OBSERVATION TARGET | S221 |

| SET REFERENCE POSITION IN MASKED REGION | S222 |

| CONNECT REFERENCE POSITIONS OF IMAGES WITH LINE SEGMENTS IN CHRONOLOGICAL ORDER TO GENERATE AND OUTPUT TRAJECTORY OF LIVING BODY AS OBSERVATION TARGET | S223 |

TO S230

*FIG.6*

FIG.7A

FIG.7B

EP 4 177 350 A1

FIG.7C

FIRST TIME — 400a

SECOND TIME — 400b

THIRD TIME — 400c

FOURTH TIME — 400d

FIFTH TIME — 400e

410a

410b

410c

410d

410e

420

*FIG.8*

EP 4 177 350 A1

*FIG.9A*

FIG.9B

## S240

```
        ○ FROM S232
        │
        ▼
┌─────────────────────────────────────┐
│ CALCULATE DISTANCE BETWEEN START AND END │
│ POINTS OF OBSERVATION TARGET BASED ON    │ ───── S241
│ GENERATED TRAJECTORY OF LIVING BODY AS   │
│ OBSERVATION TARGET                       │
└─────────────────────────────────────┘
        │
        ▼
┌─────────────────────────────────────┐
│ CALCULATE TOTAL MOVING DISTANCE OF OBSERVA- │
│ TION TARGET BASED ON GENERATED TRAJECTORY OF │ ───── S242
│ LIVING BODY AS OBSERVATION TARGET            │
└─────────────────────────────────────┘
        │
        ▼
┌─────────────────────────────────────┐
│ CALCULATE LINEARITY OF LIVING BODY AS │
│ OBSERVATION TARGET                    │ ───── S243
└─────────────────────────────────────┘
        │
        ▼
        ○ TO S250
```

*FIG.10*

EP 4 177 350 A1

## S250

FROM S243

INPUT THRESHOLD OF MIGRATION PROPERTY SCALE TO INPUT UNIT — S251

EVALUATE MIGRATION PROPERTY OF LIVING BODY AS OBSERVATION TARGET BASED ON THRESHOLD OF TOTAL MOVING DISTANCE AND LINEARITY INPUT THROUGH INPUT UNIT — S252

OUTPUT EVALUATION RESULT OF MIGRATION PROPERTY OF LIVING BODY AS OBSERVATION TARGET — S254

TO END

*FIG.11*

EP 4 177 350 A1

FROM S251

S252

S2521

IS TOTAL MOVING DISTANCE LONGER THAN THRESHOLD?

YES

NO

Track721

Track1057

Track771

Track151

OBSERVATION TARGET HAVING TOTAL MOVING DISTANCE BEING LARGE

TO S2522

Track451

Track300

OBSERVATION TARGET HAVING TOTAL MOVING DISTANCE BEING SMALL

CLASSIFY INTO A GROUP

FIG.12

FIG.13

*FIG.14*

*FIG.15*

FROM S242 OR S243

CALCULATE REACHING DISTANCE BASED ON
GENERATED TRAJECTORY OF LIVING BODY
AS OBSERVATION TARGET

S246

TO S250

*FIG.16*

FIG.17

FIG.18

EP 4 177 350 A1

FROM S243

CALCULATE MOVING SPEED BASED ON
GENERATED TRAJECTORY OF LIVING BODY
AS OBSERVATION

S247

TO S250

*FIG.19*

FIG.20

*FIG.21*

## INTERNATIONAL SEARCH REPORT

International application No.

PCT/JP2021/023586

### A. CLASSIFICATION OF SUBJECT MATTER

C12Q 1/02(2006.01)i; C12M 1/34(2006.01)i; G06T 7/00(2017.01)i; G06T 7/20(2017.01)i
FI: C12Q1/02; G06T7/00 630; C12M1/34 A; G06T7/20

According to International Patent Classification (IPC) or to both national classification and IPC

### B. FIELDS SEARCHED

Minimum documentation searched (classification system followed by classification symbols)
C12Q1/02; C12M1/34; G06T7/00; G06T7/20

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)
JSTPlus/JMEDPlus/JST7580 (JDreamIII); CAplus/MEDLINE/EMBASE/BIOSIS (STN)

### C. DOCUMENTS CONSIDERED TO BE RELEVANT

| Category* | Citation of document, with indication, where appropriate, of the relevant passages | Relevant to claim No. |
|---|---|---|
| X | WO 2007/066684 A1 (EFFECTOR CELL INSTITUTE, INC.) 14 June 2007 (2007-06-14) claims, paragraphs [0013]-[0014] [0057], [0061] | 1, 6, 11-12 |
| Y | claims, paragraphs [0013]-[0014] [0057], [0061] | 1-16 |
| X | JP 2010-119314 A (DAINIPPON PRINTING CO., LTD.) 03 June 2010 (2010-06-03) claims, paragraphs [0019], [0023], fig. 2 | 1, 6, 11-12 |
| Y | claims, paragraphs [0019], [0023], fig. 2 | 1-16 |
| X | WO 2014/126125 A1 (FUKUOKA UNIVERSITY) 21 August 2014 (2014-08-21) paragraphs [0046], [0073]-[0076], example 1, tables 1-2, fig. 2A-C | 1, 6, 11-12 |
| Y | paragraphs [0046], [0073]-[0076], example 1, tables 1-2, fig. 2A-C | 1-16 |

☒ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 31 August 2021 (31.08.2021) | 07 September 2021 (07.09.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2021/023586

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2009-22276 A (KURARAY CO., LTD.) 05 February 2009 (2009-02-05) paragraphs [0011], [0103]-[0104], table 1 | 1-16 |
| Y | WO 2019/167398 A1 (NAGOYA UNIVERSITY) 06 September 2019 (2019-09-06) claims 2-3, 15, paragraph [0075] | 1-16 |
| Y | JP 2017-93467 A (EMD MILLIPORE CORP.) 01 June 2017 (2017-06-01) claims 1, 18, paragraph [0004] | 1-16 |
| A | JP 2017-23055 A (DAINIPPON PRINTING CO., LTD.) 02 February 2017 (2017-02-02) entire text | 1-16 |
| A | JP 2013-164302 A (M&T PROJECT PARTNERS INC.) 22 August 2013 (2013-08-22) entire text | 1-16 |

Form PCT/ISA/210 (continuation of second sheet) (January 2015)

**INTERNATIONAL SEARCH REPORT**
Information on patent family members

| International application No. |
| --- |
| PCT/JP2021/023586 |

| Patent Documents referred in the Report | Publication Date | Patent Family | Publication Date |
| --- | --- | --- | --- |
| WO 2007/066684 A1 | 14 Jun. 2007 | US 2012/0028288 A1 claims, paragraphs [0039]-[0050], [0123], [0129] EP 1964926 A1 JP 2012-141314 A | |
| JP 2010-119314 A | 03 Jun. 2010 | (Family: none) | |
| WO 2014/126125 A1 | 21 Aug. 2014 | US 2016/0069858 A1 paragraphs [0104]-[0110], [0153]-[0156], example 1, tables 1-2, fig. 2A-C EP 2975403 A1 | |
| JP 2009-22276 A | 05 Feb. 2009 | (Family: none) | |
| WO 2019/167398 A1 | 06 Sep. 2019 | (Family: none) | |
| JP 2017-93467 A | 01 Jun. 2017 | US 2009/0023608 A1 claims 1, 18, paragraph [0004] WO 2013/151616 A1 EP 2834649 A1 JP 2015-517804 A | |
| JP 2017-23055 A | 02 Feb. 2017 | (Family: none) | |
| JP 2013-164302 A | 22 Aug. 2013 | (Family: none) | |

Form PCT/ISA/210 (patent family annex) (January 2015)

**EP 4 177 350 A1**

**Patent documents cited in the description**

- JP 6035844 B